(19) Europäisches Patentamt / European Patent Office / Office européen des brevets

(11) **EP 4 074 849 A1**

(12) **EUROPEAN PATENT APPLICATION**
published in accordance with Art. 153(4) EPC

(43) Date of publication:
**19.10.2022 Bulletin 2022/42**

(21) Application number: **20900267.4**

(22) Date of filing: **30.11.2020**

(51) International Patent Classification (IPC):
*C22C 9/04* (2006.01)        *C22F 1/00* (2006.01)
*C22F 1/08* (2006.01)

(52) Cooperative Patent Classification (CPC):
**C22C 9/04; C22F 1/08**

(86) International application number:
**PCT/JP2020/044418**

(87) International publication number:
**WO 2021/117528 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 11.12.2019 PCT/JP2019/048438
11.12.2019 PCT/JP2019/048455
23.12.2019 PCT/JP2019/050255
17.02.2020 PCT/JP2020/006037

(71) Applicant: **Mitsubishi Materials Corporation Tokyo 100-8117 (JP)**

(72) Inventors:
• **OISHI, Keiichiro**
**Sakai-shi, Osaka 590-0906 (JP)**
• **SUZAKI, Kouichi**
**Sakai-shi, Osaka 590-0906 (JP)**
• **GOTO, Hiroki**
**Sakai-shi, Osaka 590-0906 (JP)**

(74) Representative: **Hoffmann Eitle**
**Patent- und Rechtsanwälte PartmbB**
**Arabellastraße 30**
**81925 München (DE)**

(54) **FREE-CUTTING COPPER ALLOY AND METHOD FOR MANUFACTURING FREE-CUTTING COPPER ALLOY**

(57)    This free-cutting copper alloy comprises Cu: more than 59.7% but less than 64.7%, Si: more than 0.60% but less than 1.30%, Pb: more than 0.001% but less than 0.20%, Bi: more than 0.001% but less than 0.10 mass%, and P: more than 0.001% but less than 0.15%, with the remainder being Zn and unavoidable impurities, wherein the total amount of Fe, Mn, Co, and Cr is less than 0.45%, the total amount of Sn and Al is less than 0.45%, $56.7 \leq Cu - 4.7 \times Si + 0.5 \times Pb + 0.5 \times Bi - 0.5 \times P \leq 59.7$ and $0.003 \leq Pb + Bi < 0.25$ are satisfied, $0.02 \leq Bi/(Pb + Bi) \leq 0.98$ is satisfied if $0.003 \leq Pb + Bi < 0.08$, $0.01 \leq Bi/(Pb + Bi) \leq 0.40$ or $0.85 \leq Bi/(Pb + Bi) \leq 0.98$ is satisfied if $0.08 \leq Pb + Bi < 0.13$, $0.01 \leq f3 = Bi/(Pb + Bi) \leq 0.33$ is satisfied if $0.13 \leq Pb + Bi < 0.25$, the metallographic structure of the alloy comprises $\alpha$ phase and $\beta$ phase, and $17 \leq \beta \leq 75$, $7.0 \leq (Bi + Pb - 0.001)^{1/2} \times 10 + (P - 0.001)^{1/2} \times 5 + (\beta - 8)^{1/2} \times (Si - 0.2)^{1/2} \times 1.3 \leq 16.0$ are satisfied.

EP 4 074 849 A1

## Description

TECHNICAL FIELD

The present invention relates to a free-cutting copper alloy having a high strength and a significantly reduced Pb content and a method for producing a free-cutting copper alloy. The present invention relates to a free-cutting copper alloy used for automobile components, electrical and electronic apparatus components, mechanical components, stationaries, toys, sliding components, measuring instrument components, precision mechanical components, medical components, drink-related devices and components, devices and components for water drainage, industrial plumbing components, or components relating to liquid or gas such as drinking water, industrial water, drainage water, or hydrogen, and a method for producing the free-cutting copper alloy. Examples of specific component names include valves, joints, cocks, shut-off valves, faucets, faucet fittings, gears, axles, bearings, shafts, sleeves, spindles, sensors, bolts, nuts, worm gears, terminals, horn contact, flare nuts, pen points, insert nuts, cap nuts, control valves, check valves, nipples, spacers, and screws. The present invention relates to a free-cutting copper alloy used for the components that are made by machining, and a method for producing the free-cutting copper alloy.

The present application claims priority on International Patent Application No. PCT/JP2019/048438 filed on December 11, 2019, International Patent Application No. PCT/JP2019/048455 filed on December 11, 2019, International Patent Application No. PCT/JP2019/050255 filed on December 23, 2019, and International Patent Application No. PCT/JP2020/006037 filed on February 17, 2020, the contents of which are incorporated herein by reference.

BACKGROUND ART

Conventionally, a Cu-Zn-Pb alloy (so-called a free-cutting brass bar, brass for forging, or brass for casting) or a Cu-Sn-Zn-Pb alloy (so-called bronze casting: gunmetal) having excellent machinability was generally used for automobile components, electrical, home appliance, and electronic apparatus components, mechanical components, stationaries, precision mechanical components, medical components, and devices and components relating to liquid or gas such as drinking water, industrial water, drainage water, or hydrogen, specific component names of which include valve, joint, gear, sensor, nut, and screw.

A Cu-Zn-Pb alloy includes 56 to 65 mass% Cu, 1 to 4 mass% Pb, and the balance is Zn. A Cu-Sn-Zn-Pb alloy includes 80 to 88 mass% Cu, 2 to 8 mass% Sn, 1 to 8 mass% Pb, and the balance is Zn.

However, recently, Pb's influence on human body and the environment is becoming a concern, and momentum to regulate Pb is increasing in various countries. For example, a regulation for reducing the Pb content in drinking water supply devices to be 0.25 mass% or lower came into force in January 2010 in California, the United States. In countries other than the United States also, such regulation is rapidly being established, and development of a copper alloy material that meets the requirements of the regulation on Pb content is in demand.

In addition, in other industrial fields such as those of automobiles, electrical and electronic apparatuses, and machines, for example, in ELV regulations and RoHS regulations of the Europe, free-cutting copper alloys are exceptionally allowed to include maximum 4 mass% Pb. However, like in the field of drinking water, strengthening of regulations on Pb content has been actively discussed including elimination of the exceptions.

While there is a trend to strengthen Pb regulations for free-cutting copper alloys, alloys like (1) a Cu-Zn-Bi alloy or Cu-Zn-Bi-Se alloy including Bi having machinability (machining performance, machinability-improvement function) or, in some cases, including not only Bi but also Se instead of Pb, (2) a Cu-Zn alloy including a high concentration of Zn in which the amount of β phase is increased to improve machinability, (3) a Cu-Zn-Si alloy or Cu-Zn-Sn alloy including large amounts of γ phase and κ phase having machinability instead of Pb, and further, (4) a Cu-Zn-Sn-Bi alloy including a large amount of γ phase and Bi, etc. are proposed.

For example, Patent Documents 1 and 12 disclose a method of improving corrosion resistance and machinability by adding about 1.0 to 2.5 mass% Sn and about 1.5 to 2.0 mass% Bi to a Cu-Zn alloy such that γ phase precipitates.

However, alloys including Bi instead of Pb have many problems. For example, Bi has lower machinability than Pb. Bi may be harmful to the environment and human body like Pb. Bi has a resourcing problem because it is a rare metal. Further, Bi embrittles a copper alloy material.

In addition, as disclosed in Patent Document 1, even when γ phase of a Cu-Zn-Sn alloy is precipitated, γ phase including Sn has poor machinability, thus requiring co-addition of Bi having machinability.

Further, it is absolutely impossible to replace a free-cutting copper alloy containing lead with a Cu-Zn binary alloy including a large amount of β phase since even though β phase contributes to improvement of machinability, it has lower machinability than Pb.

For this reason, Cu-Zn-Si alloys including Si instead of Pb are proposed as free-cutting copper alloys in, for example, Patent Documents 2 to 11.

In Patent Documents 2 and 3, excellent machinability is realized without including Pb or with a small amount of Pb by the excellent machinability of γ phase, or, in some cases, κ phase formed in an alloy comprising a high concentration of Cu and Si, specifically, 69% to 79 mass% and 2 to 4 mass%, respectively. By including higher than or equal to 0.3 mass% Sn and higher than or equal to 0.1 mass% Al, formation of γ phase having machinability is further increased and accelerated such that machinability can be improved. Corrosion resistance is improved by forming a large amount of γ phase.

In Patent Document 4, excellent machinability is obtained by adding an extremely small amount (0.02 mass% or lower) of Pb and simply defining the total area of γ phase and κ phase mainly in consideration of the Pb content.

Patent Document 5 proposes a copper alloy in which Fe is included in a Cu-Zn-Si alloy.

Patent Document 6 proposes a copper alloy in which Sn, Fe, Co, Ni, and Mn are included in a Cu-Zn-Si alloy.

Patent Document 7 proposes a Cu-Zn-Si alloy having an α phase matrix including κ phase in which area ratios of β phase, γ phase, and μ phase are limited.

Patent Document 8 proposes a Cu-Zn-Si alloy having an α phase matrix including κ phase in which area ratios of β phase and γ phase are limited.

Patent Document 9 proposes a Cu-Zn-Si alloy in which the length of the longer sides of γ phase and the length of the longer sides of μ phase are defined.

Patent Document 10 proposes a Cu-Zn-Si alloy to which Sn and Al are added.

Patent Document 11 proposes a Cu-Zn-Si alloy in which γ phase is distributed in the form of particles at a phase boundary between α phase and β phase to improve machinability.

Patent Document 14 proposes a Cu-Zn alloy to which Sn, Pb, and Si are added.

Now, as described in Patent Document 13 and Non-Patent Document 1, in Cu-Zn-Si alloys, it is known that, even when looking at only those having Cu concentration of 60 mass% or higher, a Zn concentration of 40 mass% or lower, and Si concentration of 10 mass% or lower, 10 kinds of metallic phases including α phase matrix, β phase, γ phase, δ phase, ε phase, ζ phase, η phase, κ phase, μ phase, and χ phase, in some cases, 13 kinds of metallic phases including additional phases of α', β', and γ' are present. Further, it is empirically known that, as the number of additive elements increases, the metallographic structure becomes complicated, and a new phase or an intermetallic compound may appear. In addition, it is also empirically well known that there is a large difference in the constitution of metallic phases between what an equilibrium phase diagram shows and that of an actually produced alloy. Further, it is well known that the compositions of these phases change depending on the concentrations of Cu, Zn, Si, and the like in a copper alloy and processing heat history.

Incidentally, in Cu-Zn-Pb alloys including Pb, the Cu concentration is about 60 mass% whereas in all the Cu-Zn-Si alloys described in Patent Documents 2 to 9, the Cu concentrations are 65 mass% or higher, and a reduction in the concentration of expensive Cu is desired from a viewpoint of economic efficiency.

In Patent Document 10, Sn and Al are indispensably contained in a Cu-Zn-Si alloy in order to obtain excellent corrosion resistance, and also a large amount Pb, or Bi is required in order to realize excellent machinability.

Patent Document 11 describes copper alloy castings free of Pb having a Cu concentration of about 65 mass% or higher and good castability and mechanical strength in which machinability is improved by γ phase, and examples containing large amounts of Sn, Mn, Ni Sb, and B.

In addition, for conventional leaded free-cutting copper alloys, it is expected that high-speed machining such as turning or drilling can be performed without troubles for at least 24 hours and without replacement of cutting tool or adjustment such as polishing of cutting edge for 24 hours. Although depending on the degree of difficulty of machining, the same level of machinability is expected for alloys containing a significantly reduced amount of Pb.

Now, in Patent Document 5, the Cu-Zn-Si alloy includes Fe, and Fe and Si form an intermetallic compound of Fe-Si which is harder and more brittle than γ phase. This intermetallic compound has problems like reducing tool life of a cutting tool during machining and generation of hard spots during polishing impairing the external appearance. In addition, since Fe combines with Si which is an additive element and Si is thus consumed as an intermetallic compound, the performance of the alloy deteriorates.

In addition, in Patent Document 6, Sn, Fe, Co, and Mn are added to a Cu-Zn-Si alloy. However, Fe, Co, and Mn all combine with Si to form a hard and brittle intermetallic compound. Therefore, such addition causes problems during machining or polishing as disclosed by Patent Document 5.

PRIOR ART DOCUMENTS

Patent Document

Patent Document 1: PCT International Publication No. WO2008/081947
Patent Document 2: Japanese Unexamined Patent Application, First Publication No. 2000-119775

Patent Document 3: Japanese Unexamined Patent Application, First Publication No. 2000-119774
Patent Document 4: PCT International Publication No. WO2007/034571
Patent Document 5: Published Japanese Translation No. 2016-511792 of the PCT International Publication
Patent Document 6: Japanese Unexamined Patent Application, First Publication No. 2004-263301
Patent Document 7: PCT International Publication No. WO2012/057055
Patent Document 8: Japanese Unexamined Patent Application, First Publication No. 2013-104071
Patent Document 9: PCT International Publication No. WO2019/035225
Patent Document 10: Japanese Unexamined Patent Application, First Publication No. 2018-048397
Patent Document 11: Published Japanese Translation No. 2019-508584 of the PCT International Publication
Patent Document 12: PCT International Publication No. WO2005/093108 Patent Document 13: United States Patent No. 4055445
Patent Document 14: Japanese Unexamined Patent Application, First Publication No. 2016-194123

Non-Patent Document

Non-Patent Document 1: Genjiro MIMA, Masaharu HASEGAWA, Journal of the Japan Copper and Brass Research Association, 2 (1963), p. 62 to 77

DISCLOSURE OF INVENTION

Problems to be Solved by the Invention

The present invention has been made in order to solve the above-described problems in the conventional art, and an object thereof is to provide a free-cutting copper alloy having excellent hot workability, a high strength, a good balance between strength and toughness, and excellent chip breakability with significantly reduced Pb content, and a method for producing the free-cutting copper alloy.

In this specification, unless specified otherwise, a hot worked material includes a hot extruded material, a hot forged material, and a hot rolled material. Cold workability refers to performance of cold working such as drawing, wire drawing, rolling, crimping, or bending. Excellent machinability refers to low cutting resistance and good or excellent chip breakability during turning with a lathe. Chip breakability is considered good if the length of chips produced during cutting is about 1 mm to about 50 mm. In this particular specification, it is considered good if generated chips are easily broken and when their cross section is observed, it has a zigzag shape. That the cross section has a zigzag shape indicates that rectilinear fracture has occurred like when a material is fractured by shearing. This type of chip is also referred to as "shear type chip". A chip whose cross section is less uneven and does not have a zigzag shape is referred to as a "flow type chip". Conductivity refers to electrical conductivity and thermal conductivity. In addition, $\beta$ phase includes $\beta'$ phase, $\gamma$ phase includes $\gamma'$ phase, and $\alpha$ phase includes $\alpha'$ phase. Area ratio of a phase will may simply be referred to as "amount". Cooling rate refers to an average cooling rate in a given temperature range. Further, particles containing Pb refer not only to Pb particles but also particles containing both Bi and Pb (particles of an alloy of Bi and Pb) and are sometimes simply referred to as "Pb particles". 24 hours refer to one day. P-containing compound is a compound including P and at least either Si or Zn or both Si and Zn, in some cases, further including Cu and/or inevitable impurities such as Fe, Mn, Cr, or Co. P-containing compound is also referred to as compound containing P and Si and/or Zn.

Solutions for Solving the Problems

In order to solve the above-described problems and to achieve the above-described object, the present inventors conducted a thorough investigation and obtained the following findings.

Patent Document 4 discloses that in Cu-Zn-Si alloys, $\beta$ phase does not substantially contribute to machinability but rather inhibits it. Patent Documents 2 and 3 recite that when $\beta$ phase is present, $\beta$ phase is changed into $\gamma$ phase by heat treatment. In Patent Documents 7, 8, and 9, also, the amount of $\beta$ phase is significantly limited. In Patent Documents 1 and 12, in order to give excellent dezincification corrosion resistance to a Cu-Zn-Sn-Bi alloy, $\beta$ phase, which has poor corrosion resistance, is limited.

First, the present inventors diligently studied $\beta$ phase that had been known to have little effect on machinability of a Cu-Zn-Si alloy in the conventional art and ascertained the composition of $\beta$ phase that has a large effect on machinability. That is, $\beta$ phase of a Cu-Zn-Si alloy made by adding an appropriate amount of Si to appropriate amounts of Cu and Zn, exhibited remarkably improved machinability especially in terms of chip breakability compared with Si-free $\beta$ phase. That is, a cross section of chip came to have a shape like a saw blade or a zigzag shape, and rectilinearly divided portions came to be observed. However, there still was a significant difference in machinability compared with a free-cutting brass including 3 mass% Pb even if Si-containing $\beta$ phase was present.

Then we learned that there were some ways of making improvement to solve the problem from a perspective of metallographic structure .

Firstly, by containing P in order to improve machinability of β phase, fragmentation of chips was further promoted. As a result, chip's cross section came to have a zigzag shape with clearer dents and spikes. Further, it was found that, when compounds containing P and Si and/or Zn (for example, P-Zn, P-Si-Zn, P-Si, or P-Zn-Cu) having a size of about 0.1 to 5 μm are present, chip breakability further improves.

However, problems like deterioration of chip breakability of β phase containing Si when machined under a condition that pushes up the machining temperature such as high-speed machining or high feed machining and low ductility or toughness of β phase were located.

Secondly, the problems were significantly relieved by having β phase and α phase, a phase that inherently has poor chip breakability but has higher heat resistance than β phase be present at appropriate amounts in order to maintain chip breakability of β phase when machined at a low speed, not to impair chip breakability of β phase when machined at a high speed or a high feed, and also, to improve ductility.

Thirdly, particles containing Pb that can improve chip breakability even if the content is small. It was revealed that, when both Pb and Bi are added together, even if the amount of Pb and Bi is less than that when Pb or Bi alone is added, chip breakability is improved by a smaller total amount of Pb and Bi. It was found that chip breakability is not impaired and can be largely maintained even when high speed or high feed machining is performed.

Fourthly, however, a phenomenon that an alloy to which both Pb and Bi were added was embrittled was pointed out as a problem to be solved. When high speed or high feed machining was performed, machining temperature increased, and the material's temperature reached about 200°C in some cases. For instance, when the temperature of a material to which both Pb and Bi were added together increased to about 200°C, and in some cases, chips could not be discharged smoothly, or small cracks were formed in the machined item when an impact was applied. In some other cases, when the environment in which the machined products were used reached about 200°C and an impact was applied, cracking occurred. As described above, a phenomenon of embrittlement of alloy was located as a problem to be solved. As a result of diligent studies, the problem was solved by controlling the amounts of Pb and Bi and the mixing ratio between them. Consequently, an alloy having excellent chip breakability was able to be accomplished.

As described above, chip breakability of β phase is improved by containing Si and a small amount of P. In order to maintain chip breakability of β phase and improve toughness and ductility under various machining conditions, an appropriate amount of α phase is mixed. Then small amounts of Pb and Bi are added together at an appropriate ratio. As a result, the free-cutting copper alloy according to the present invention having excellent chip breakability, a good balance between strength and toughness, and excellent toughness at 200°C under various machining conditions came to be invented.

A free-cutting copper alloy according to the first aspect of the present invention comprises: higher than 59.7 mass% and lower than 64.7 mass% of Cu; higher than 0.60 mass% and lower than 1.30 mass% of Si; higher than 0.001 mass% and lower than 0.20 mass% of Pb; higher than 0.001 mass% and lower than 0.10 mass% of Bi; and higher than 0.001 mass% and lower than 0.15 mass% of P, with the balance being Zn and inevitable impurities,

wherein among the inevitable impurities, the total content of Fe, Mn, Co, and Cr is lower than 0.45 mass% and the total content of Sn and Al is lower than 0.45 mass%,

when Cu content is represented by [Cu] mass%, Si content is represented by [Si] mass%, Pb content is represented by [Pb] mass%, Bi content is represented by [Bi] mass%, and P content is represented by [P] mass%, relationships of

$$56.7 \leq f1 = [Cu] - 4.7 \times [Si] + 0.5 \times [Pb] + 0.5 \times [Bi] - 0.5 \times [P] \leq 59.7,$$

$$0.003 \leq f2 = [Pb] + [Bi] < 0.25,$$

$$\text{if } 0.003 \leq [Pb] + [Bi] < 0.08, \ 0.02 \leq f3 = [Bi]/([Pb] + [Bi]) \leq 0.98,$$

$$\text{if } 0.08 \leq [Pb] + [Bi] < 0.13, \ 0.01 \leq f3 = [Bi]/([Pb] + [Bi]) \leq 0.40 \text{ or } 0.85 \leq f3 = [Bi]/([Pb] + [Bi]) \leq 0.98,$$

and

$$\text{if } 0.13 \le [Pb] + [Bi] < 0.25, 0.01 \le f3 = [Bi]/([Pb] + [Bi]) \le 0.33$$

are satisfied,
the metallographic structure comprises $\alpha$ phase and $\beta$ phase, and when area ratio of $\alpha$ phase is represented by $(\alpha)\%$ and area ratio of $\beta$ phase is represented by $(\beta)\%$, relationships of

$$17 \le f4 = (\beta) \le 75$$

and

$$7.0 \le f5 = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3 \le 16.0$$

are satisfied.

A free-cutting copper alloy according to the second aspect of the present invention is the free-cutting copper alloy according to the first aspect of the present invention,

wherein when the alloy is turned by a lathe with a tool attached and a longitudinal cross section of a produced chip is observed, it can be recognized that the chip is a shear type chip whose cross section has a zigzag shape, when the surface of the chip that came in contact with the tool during turning is denominated as a machined surface and its reverse surface is denominated as a free surface, convex portions jutting toward the free surface and concave portions dented toward the machined surface are alternately positioned along the longitudinal direction of the chip, and when an average height from the machined surface to the tips of the convex portions is represented by HI, and an average distance from the machined surface to the deepest points of the concave portions is represented by H2, $0.25 \le f6 = H2/H1 \le 0.80$ is satisfied.

A free-cutting copper alloy according to the third aspect of the present invention comprises: higher than or equal to 60.5 mass% and lower than or equal to 64.0 mass% of Cu; higher than or equal to 0.75 mass% and lower than or equal to 1.25 mass% of Si; higher than or equal to 0.002 mass% and lower than 0.15 mass% of Pb; higher than or equal to 0.002 mass% and lower than 0.05 mass% of Bi; and higher than or equal to 0.005 mass% and lower than 0.10 mass% of P, with the balance being Zn and inevitable impurities,

wherein among the inevitable impurities, the total content of Fe, Mn, Co, and Cr is lower than or equal to 0.35 mass%, the total content of Sn and Al is lower than or equal to 0.35 mass%, the content of each of As and Sb is lower than or equal to 0.05 mass%, and the content of Cd is lower than or equal to 0.01 mass%, when Cu content is represented by [Cu] mass%, Si content is represented by [Si] mass%, Pb content is represented by [Pb] mass%, Bi content is represented by [Bi] mass%, and P content is represented by [P] mass%, relationships of

$$57.0 \le f1 = [Cu] - 4.7 \times [Si] + 0.5 \times [Pb] + 0.5 \times [Bi] - 0.5 \times [P] \le 59.0,$$

$$0.005 \le f2 = [Pb] + [Bi] < 0.15,$$

$$\text{if } 0.005 \le [Pb] + [Bi] < 0.08, 0.03 \le f3 = [Bi]/([Pb] + [Bi]) \le 0.96,$$

and

$$\text{if } 0.08 \le [Pb] + [Bi] < 0.15, 0.02 \le f3 = [Bi]/([Pb] + [Bi]) \le 0.33$$

are satisfied,

the metallographic structure comprises α phase and β phase, and in constituent phases of the metallographic structure, when area ratio of α phase is represented by (α)% and area ratio of β phase is represented by (β)%, relationships of

$$30 \leq f4 = (\beta) \leq 64$$

and

$$8.5 \leq f5 = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3 \leq 14.0$$

are satisfied, and
P-containing compounds are present in the metallographic structure.

A free-cutting copper alloy according to the fourth aspect of the present invention is the free-cutting copper alloy according to the third aspect of the present invention,

wherein when the alloy is turned by a lathe with a tool attached and a longitudinal cross section of a produced chip is observed, it can be recognized that the chip is a shear type chip whose cross section has a zigzag shape, when the surface of the chip that came in contact with the tool during turning is denominated as a machined surface and its reverse surface is denominated as a free surface, convex portions jutting toward the free surface and concave portions dented toward the machined surface are alternately positioned along the longitudinal direction of the chip, and when an average height from the machined surface to the tips of the convex portions is represented by H1, and an average distance from the machined surface to the deepest points of the concave portions is represented by H2, $0.35 \leq f6 = H2/H1 \leq 0.65$ is satisfied.

A free-cutting copper alloy according to the fifth aspect of the present invention is the free-cutting copper alloy according to any one of the first to fourth aspects of the present invention,

wherein the electrical conductivity is 13% IACS or higher,
when a Charpy impact test using specimens with a U-shaped notch is performed, the impact test value at normal temperature, 1-1 (J/cm$^2$), is 15 J/cm$^2$ or higher, the impact test value when heated to 200°C, 1-2 (J/cm$^2$), is 12 J/cm$^2$ or higher, and the Vickers hardness (HV) is 110 or higher, and
$f7 = (I-1)^{1/2} \times (HV)$ representing the balance between the impact test value at normal temperature and the Vickers hardness HV is 550 or higher.

A free-cutting copper alloy according to the sixth aspect of the present invention is the free-cutting copper alloy according to any one of the first to fifth aspects of the present invention, which is used for an automobile component, an electrical or electronic apparatus component, a mechanical component, a stationery, a toy, a sliding component, a measuring instrument component, a precision mechanical component, a medical component, a drink-related device or component, a device or component for water drainage, or an industrial plumbing component.

A method for producing a free-cutting copper alloy according to the seventh aspect of the present invention is a method for producing the free-cutting copper alloy according to any one of the first to sixth aspects of the present invention, which comprises: one or more hot working steps,
wherein in the final hot working step among the hot working steps, hot working temperature is higher than 530°C and lower than 650°C, the average cooling rate in the temperature range from 530°C to 440°C after hot working is 0.1 °C/min or higher and 70 °C/min or lower, and the average cooling rate in the temperature range from 400°C to 200°C is 5 °C/min or higher.

Effects of Invention

According to one aspect of the present invention, a free-cutting copper alloy having good machinability, excellent chip breakability, excellent hot workability, a high strength, a good balance between strength, toughness, and ductility, and good toughness at 200°C and containing a significantly reduced amount of lead, and a method for producing the free-cutting copper alloy can be provided.

BRIEF DESCRIPTION OF DRAWINGS

Fig. 1 is a picture of a cross section of a chip taken upon completion of Test No. T114.
Fig. 2 is a picture of a cross section of a chip taken upon completion of Test No. T101.
Fig. 3 is a picture of the metallographic structure of the copper alloy of Test No. T27.

EMBODIMENTS FOR CARRYING OUT THE INVENTION

Below is a description of free-cutting copper alloys according to embodiments of the present invention and methods for producing the free-cutting copper alloys.

Free-cutting copper alloys according to the embodiments are used for automobile components, electrical or electronic apparatus components, mechanical components, stationeries, toys, sliding components, measuring instrument components, precision mechanical components, medical components, drink-related devices and components, devices and components for water drainage, and industrial plumbing components. Specifically, the alloys are used for valves, faucet fittings, faucets, joints, gears, screws, nuts, sensors, pressure vessels and the like that are used as automobile component, electrical or electronic component, home appliance component, mechanical component, or device or component that comes in contact with liquid or gas such as drinking water, industrial water, and hydrogen.

Here, in this specification, an element symbol in parentheses such as [Zn] represents the content (mass%) of the element.

In embodiments of the present invention, using this content expressing method, composition relational expressions f1 to f3 are defined as follows.

$$\text{Composition relational expression f1} = [Cu] - 4.7 \times [Si] + 0.5 \times [Pb] + 0.5 \times [Bi] - 0.5 \times [P]$$

$$\text{Composition relational expression f2} = [Pb] + [Bi]$$

$$\text{Composition relational expression f3} = [Bi]/([Pb]+[Bi])$$

Further, in the embodiments, in the metallographic structure, area ratio of $\alpha$ phase is represented by $(\alpha)\%$ and area ratio of $\beta$ phase is represented by $(\beta)\%$. Area ratio of each of the phases will also be referred to as "amount of each of the phases", "proportion of each of the phases", or "proportion that each of the phases occupies".

In the embodiments, the following metallographic structure relational expressions and composition and metallographic structure relational expressions are defined.

$$\text{Metallographic Structure Relational Expression f4} = (\beta)$$

$$\text{Composition and Metallographic Structure Relational Expression f5} = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3$$

Further, when an embodiment alloy is turned by a lathe with a tool attached, a produced chip is embedded in resin, then a cross section taken along the longitudinal direction of the chip is observed, it is preferable that the cross section has a zigzag shape which indicates that the chip is a shear type chip. The surface of the chip that came in contact with the tool during turning will be referred to as a "machined surface", and its reverse surface will be referred to as a "free surface". Convex portions (projected portions) jutting toward the free surface and concave portions (depressed portions) dented toward the machined surface are alternately positioned along the longitudinal direction of the chip. In the chip cross section, an average height from the machined surface to the tips of the convex portions (height of convex portions) is represented by HI, and an average distance from the machined surface to the deepest points of the concave portions (height of concave portions) is represented by H2. A chip relational expression of f6 relating to the shape of the chip cross section is defined as follows.

## Chip Relational Expression f6 = H2/H1

A free-cutting copper alloy according to the first embodiment of the present invention includes: higher than 59.7 mass% and lower than 64.7 mass% Cu; higher than 0.60 mass% and lower than 1.30 mass% Si; higher than 0.001 mass% and lower than 0.20 mass% Pb; higher than 0.001 mass% and lower than 0.10 mass% Bi; higher than 0.001 mass% and lower than 0.15 mass% P, and the balance is Zn and inevitable impurities. Among the inevitable impurities, the total content of Fe, Mn, Co, and Cr is lower than 0.45 mass% and the total content of Sn and Al is lower than 0.45 mass%.

The composition relational expression f1 is in a range of $56.7 \leq f1 \leq 59.7$, and the composition relational expression f2 is in a range of $0.003 \leq f2 < 0.25$. Further, if $0.003 \leq f2 < 0.08$, the composition relational expression f3 is in a range of $0.02 \leq f3 \leq 0.98$. If $0.08 \leq f2 < 0.13$, the composition relational expression f3 is in a range of $0.01 \leq f3 \leq 0.40$ or $0.85 \leq f3 \leq 0.98$. If $0.13 \leq f2 < 0.25$, the composition relational expression f3 is in a range of $0.01 \leq f3 \leq 0.33$.

The metallographic structure comprises $\alpha$ phase and $\beta$ phase, and the metallographic structure relational expression f4 is in a range of $17 \leq f4 \leq 75$, and the composition and metallographic structure relational expression f5 is in a range of $7.0 \leq f5 \leq 16.0$.

The chip relational expression f6 is preferably in a range of $0.25 \leq f6 \leq 0.80$.

A free-cutting copper alloy according to the second embodiment of the present invention includes: higher than or equal to 60.5 mass% and lower than or equal to 64.0 mass% Cu; higher than or equal to 0.75 mass% and lower than or equal to 1.25 mass% Si; higher than or equal to 0.002 mass% and lower than 0.15 mass% Pb; higher than or equal to 0.002 mass% and lower than 0.05 mass% Bi; higher than or equal to 0.005 mass% and lower than 0.10 mass% P, and the balance is Zn and inevitable impurities. Among the inevitable impurities, the total content of Fe, Mn, Co, and Cr is lower than or equal to 0.35 mass%, the total content of Sn and Al is lower than or equal to 0.35 mass%, the content of each of As and Sb is lower than or equal to 0.05 mass%, and the content of Cd is lower than or equal to 0.01 mass%.

The composition relational expression f1 is in a range of $57.0 \leq f1 \leq 59.0$ and the composition relational expression f2 is in a range of $0.005 \leq f2 < 0.15$. Further, if $0.005 \leq f2 < 0.08$, the composition relational expression f3 is in the range of $0.03 \leq f3 \leq 0.96$. If $0.08 \leq f2 < 0.15$, the composition relational expression f3 is in a range of $0.02 \leq f3 \leq 0.33$.

The metallographic structure comprises $\alpha$ phase and $\beta$ phase, and the metallographic structure relational expression f4 is in a range of $30 \leq f4 \leq 64$ and the composition and metallographic structure relational expression f5 is in a range of $8.5 \leq f5 \leq 14.0$.

P-containing compounds are present in the metallographic structure.

The chip relational expression f6 is preferably in a range of $0.35 \leq f6 \leq 0.65$.

In the free-cutting copper alloy according to the first or second embodiment of the present invention, it is preferable that the electrical conductivity is 13% IACS or higher, when a Charpy impact test using specimens with a U-shaped notch is performed, the impact test value at normal temperature, I-1 ($J/cm^2$), is 15 $J/cm^2$ or higher, the impact test value when heated to 200°C, 1-2 ($J/cm^2$), is 12 $J/cm^2$ or higher, and the Vickers hardness (HV) is 110 or higher, and the characteristic relational expression $f7 = (I-1)^{1/2} \times (HV)$ representing the balance between the impact test value at a normal temperature and the Vickers hardness HV is 550 or higher.

The reasons why the component composition, the composition relational expressions f1, f2, and f3, the metallographic structure relational expression f4, the composition and metallographic structure relational expression f5, the chip relational expression (chip shape index) f6, the characteristic relational expression f7 and the like are defined as described above are explained below.

<Component Composition>

(Cu)

Cu is a main element of an alloy according to an embodiment of the present invention. In order to overcome the challenges of the present invention, it is necessary to contain at least more than 59.7 mass% Cu. When the Cu content is 59.7 mass% or less, the proportion of $\beta$ phase is more than 75% although depending on the contents of Si, Zn, P, Pb, and Bi and the production process, the proportion of $\alpha$ phase is less than 25%, corrosion resistance and stress corrosion cracking resistance are poor, toughness and ductility are also poor, and chip breakability is deteriorated depending on the machining conditions. Accordingly, the lower limit of the Cu content is more than 59.7 mass%, preferably 60.5 mass% or more, and more preferably 61.0 mass% or more.

On the other hand, when the Cu content is 64.7 mass% or more, the proportion of $\beta$ phase is small, and $\gamma$ phase, $\mu$ phase, and/or $\kappa$ phase may appear although depending on the contents of Si, Zn, P, Pb, and Bi and the production process. Accordingly, the Cu content is less than 64.7 mass%, preferably 64.3 mass% or less, and more preferably 64.0 mass% or less.

(Si)

Si is a main element of a free-cutting copper alloy according to an embodiment of the present invention. Si contributes to the formation of metallic phases such as β phase, κ phase, γ phase, μ phase, or ζ phase. Si improves the machinability, strength, castability, hot workability, wear resistance, and stress corrosion cracking resistance of the alloys.

Si reduces the stacking fault energy of copper alloy and promotes production of shear type chips during machining. Si reduces, in particular, the cutting resistance of β phase, improves chip breakability, improves the heat resistance of α phase, and improves the chip breakability of α phase even though its effect on chip breakability is small. Although depending on the Cu concentration and the proportion of β phase, in order to obtain chips whose cross section has a zigzag shape when it is observed after the chips were produced by machining is observed, at least more than 0.20 mass% Si is required. However, when the Si content of more than 0.20 mass% but 0.60 mass% or less is insufficient to stably obtain thin chips whose cross section has a zigzag shape. When the Si content is more than 0.60 mass%, thin chips whose cross section has a zigzag shape can be stably obtained. In particular, in the chip cross section, deeper rectilinear division caused by shearing is observed, and the value of f6, an index representing chip breakability described below, is 0.80 or lower. In addition, since α phase and β phase are strengthened by solid solution hardening due to an action of Si contained. On the other hand, the inclusion of Si also affects the ductility and toughness of the alloy. The Si content therefore is more than 0.60 mass%, preferably more than 0.70 mass%, more preferably 0.75 mass% or more, and still more preferably 0.80 mass% or more. On the other hand, even if Si is contained in an amount of 1.30 mass% or more, γ phase may appear in the metallographic structure since chip breakability peaks out. In addition, in some cases, κ phase, μ phase, or the like may also appear. γ phase slightly improves the machinability of the alloy but deteriorates chip breakability in high speed or high feed machining. In addition, γ phase has lower ductility and toughness than β phase and deteriorates the toughness and ductility of the alloy. Further, the conductivity of the alloy is also deteriorated. Accordingly, the Si content is less than 1.30 mass%, preferably 1.25 mass% or less, more preferably 1.20 mass% or less, and still more preferably 1.15 mass% or less.

Incidentally, regarding hot workability, by including Si, the hot deformability of α phase and β phase is improved and hot deformation resistance decreases when hot worked at about 500°C (a relatively low hot-working temperature) or higher.

β phase formed by including Cu, Zn, and Si in the above-described content ranges has excellent machinability. Since Si is preferentially distributed in β phase, Si exhibits its effect even if its content is small. In addition, if Si is added to a Cu-Zn alloy, particles including Pb become finer improving chip breakability even more.

When a Cu-Zn binary alloy as a base alloy includes third and fourth elements and the contents of the third and fourth elements increase or decrease, the properties and characteristics of β phase change. As described in Patent Documents 2 to 5, β phase present in an alloy including about higher than or equal to 69 mass% Cu, about higher than or equal to 2 mass% Si, and Zn as the balance does not have the same properties or characteristics as β phase present in, for example, an alloy including about 62 mass% Cu, about 0.8 mass% Si, and Zn as the balance. Further, when a large amount of inevitable impurities are included, the characteristics of β phase also change. In some cases, properties including machinability deteriorate.

(Zn)

Zn is a main element of a free-cutting copper alloy according to an embodiment of the present invention together with Cu and Si, and is an element necessary to enhance machinability, strength, ductility, and castability. Zn is described as the balance in the composition, but to be specific, its content is lower than about 39.7 mass% and preferably lower than about 39.0 mass% and higher than about 33.0 mass% (preferably higher than about 34.0 mass%).

(Pb)

In an embodiment of the present invention, machinability is improved by β phase including Si. By additionally containing small amounts of Pb and Bi, excellent machinability, in particular, chip breakability is achieved. In a composition according to an embodiment of the present invention, about 0.001 mass% Pb is solid solubilized in the matrix, and any excess amount of Pb is present in the form of particles of about 0.1 to about 3 μm in diameter. By adding Pb and Bi together, Pb and Bi are present in the form of particles containing both Pb and Bi. Due to stress concentration on Pb particles during machining, chip breakability enhances, and Pb exhibits its effect when contained in the amount exceeding 0.001 mass% if Bi is contained together with Pb. When machining at a high speed or high feed, the chip breakability of β phase is maintained by the effect of adding Pb and Bi together. The Pb content is more than 0.001 mass%, preferably 0.002 mass% or more, more preferably 0.003 mass% or more, and still more preferably 0.010 mass% or more. In particular, if the alloy is to be machined on a harsh machining condition such as at a high speed or a high feed, the Pb content is preferably 0.020 mass% or more.

Apart from its machinability improvement effect, Pb is harmful to human body and affects alloys' ductility and cold workability, too. In embodiments of the present invention, it is naturally necessary to restrict Pb content since Bi, an element whose influence on the environment and human body is unknown, is contained in a small amount. Therefore, the amount of Pb is less than 0.20 mass%, preferably less than 0.15 mass%, and more preferably less than 0.10 mass%. Pb and Bi may be present alone apart from each other, but in many cases, they coexist. When appropriate amounts of Pb and Bi are present together, better chip breakability can be obtained than when Pb or Bi is contained alone. Yet, it should be noted that when Pb and Bi are added together, toughness may be impaired when the alloy's temperature is around 200°C. Therefore, it is important that Pb and Bi are contained at an appropriate ratio in the composition (the composition relational expression f3 described below).

(Bi)

About 0.001 mass% Bi is solid-solubilized in the matrix, and any excess amount of Bi is present in the form of particles of about 0.1 to about 3 μm in diameter. In embodiments of the present invention, the objective is to obtain excellent machinability with the content of Pb, a substance that is harmful to human body, limited to less than 0.20 mass%. In the embodiments, due to the action of Si, by containing Bi and Pb together, the same level of chip breakability can be achieved with less amounts of Pb and Bi compared with when each of the elements is contained alone. In particular, it has been known that the function of improving machinability that Bi has is poorer than that of Pb. However, in the embodiments, it has been ascertained that Bi exhibits the effect that is equivalent to or better than that of Pb.

In order for an alloy to obtain excellent machinability, Bi is required in an amount at least exceeding 0.001 mass%. The Bi content is preferably 0.002 mass% or more and more preferably 0.005 mass% or more. Even though the influence of Bi on the environment or human body is unknown at present, in consideration of such influence, the Bi content is less than 0.10 mass%, preferably less than 0.05 mass%, and more preferably less than 0.02 mass%, and the total content of Pb and Bi (the composition relational expression f2 described below) is less than 0.25 mass%. By more appropriately adjusting the requirements regarding the contents of Cu, Zn, Si, and P, the amount of β phase, and the metallographic structure and appropriately adjusting the mixing ratio between Pb and Bi (the composition relational expression f3 described below), even if the amounts of Bi and Pb are limited, the alloy can obtain excellent machinability and various favorable properties.

(P)

In a Cu-Zn-Si alloy including Si and mainly comprising α phase and β phase, P is preferentially distributed in β phase. Regarding P, the machinability of β phase including Si can be improved by solid-solubilization of P in β phase. Further, by containing a certain amount of P and adjusting the production process, P-containing compounds having an average diameter of 0.1 to 3 μm are formed, and chip breakability improves more.

P-containing compounds are not formed during hot working. P is solid-solubilized in β phase during hot working. In the process of cooling after hot working, P-containing compounds precipitate mainly in β phase at a certain critical cooling rate or lower. P-containing compounds rarely precipitate in α phase. When observed with a metallographic microscope, precipitates including P appear to be small granular particles having an average particle size of about 0.3 to 3 μm. β phase including such precipitates can obtain better machinability. P-containing compound hardly affects the life of a cutting tool and does not substantially impair the ductility or toughness of an alloy. Compound including Fe, Mn, Cr or Co and Si or P contributes to improvement of strength and wear resistance of an alloy, but consumes Si and P in the alloy, causes the cutting resistance of the alloy to increase, deteriorates chip breakability, shortens the tool life, and impairs ductility of the alloy.

In order to exhibit the above-described effects, the lower limit of the P content is higher than 0.001 mass%, preferably 0.003 mass% or higher, more preferably 0.005 mass% or higher, and still more preferably 0.010 mass% or higher. Although depending on the production process applied, if P is contained in an amount exceeding 0.010 mass%, P-containing compounds become visible with a 500X metallographic microscope.

When P is added in an amount of 0.15 mass% or more, precipitates enlarge and its machinability improving effect peaks out. In addition, in some cases, machinability rather deteriorates than improves, ductility and toughness lower, the amount of P solid-solubilized in β phase increases, which deteriorates the electrical conductivity. For this reason, P content is less than 0.15 mass%, preferably less than 0.10 mass%, and more preferably 0.08 mass% or less. Even when P content is less than 0.05 mass%, P precipitates in β phase, and a sufficient amount of P-containing compounds are formed.

Incidentally, in a compound comprising P and Si, the component ratio in the composition of the compound gradually changes as the content of an element such as Mn, Fe, Cr, or Co that easily combines with Si or P increases. That is, P-containing compound having a significant effect of improving the machinability of β phase gradually changes into a compound having a less effect on machinability. Accordingly, at least the total content of Fe, Mn, Co, and Cr needs to be limited to less than 0.45 mass% and preferably 0.35 mass% or less.

(Inevitable Impurities, in particular, Fe, Mn, Co, and Cr; Sn and Al)

Examples of the inevitable impurities in an embodiment of the present invention include Mn, Fe, Al, Ni, Mg, Se, Te, Sn, Co, Ca, Zr, Cr, Ti, In, W, Mo, B, Ag, and rare earth elements.

Conventionally, a free-cutting copper alloy, in particular, a free-cutting brass including about higher or equal to 30 mass% Zn is not mainly formed of quality raw material such as electrolytic copper or electrolytic zinc but is mainly formed of recycled copper alloy. In preliminary steps (downstream step, working step) in this field of art, machining is performed on almost all the parts and components, during which a large amount of copper alloy accounting for 40 to 80 % of the material is disposed of. Examples of such disposed copper alloy include chips, mill ends, burrs, runners, and products having production defects. These disposed copper alloys are the main raw material. If cutting chips, mill ends, and the like are not properly separated, Pb, Fe, Mn, Si, Se, Te, Sn, P, Sb, As, Bi, Ca, Al, Zr, Ni, and/or rare earth elements from a leaded free-cutting brass, a free-cutting copper alloy not containing Pb but containing Bi or the like, a special brass alloy including Si, Mn, Fe, and Al, or other copper alloys mix into a raw material. In addition, cutting chips include Fe, W, Co, Mo, and the like which originate from tools. Wasted materials include plated products, and thus Ni, Cr, and Sn mix in. Further, Mg, Sn, Fe, Cr, Ti, Co, In, Ni, Se, and Te are mixed into pure copper-based scrap that is used instead of electrolytic copper. Brass-based scraps that are used instead of electrolytic copper or electrolytic zinc often contain plating, of Sn among others, resulting in contamination by a high concentration of Sn.

From a viewpoint of reuse of resources and costs, scraps including these elements are used as a raw material to the extent that there is no bad influence on the properties at least. In a leaded JIS free-cutting brass bar, C3604 (JIS H 3250), including about 3 mass% Pb as an essential element, Fe may be contained up to 0.5 mass% and Fe + Sn (the total content of Fe and Sn) may be contained up to 1.0 mass% as impurities. Also, in a leaded JIS brass casting (JIS H 5120), Pb is contained as an indispensable element in an amount of about 2 mass%, the upper limits of the remaining components are 0.8 mass% for Fe, 1.0 mass% or less for Sn, 0.5 mass% for Al, and 1.0 mass% or less for Ni. The total amount of Fe and Sn contained in C3604 which is available in the market is about 0.5 mass%. Fe or Sn may be contained in a free-cutting brass bar at a higher concentration.

Fe, Mn, Co, and Cr are solid-solubilized in α phase, β phase, and γ phase of a Cu-Zn alloy to a certain concentration. However, if Si is present then, they are likely to compound with Si. In some cases, they may combine with Si potentially resulting in consumption of Si, an element that is effective for machinability. Fe, Mn, Co, or Cr that is compounded with Si forms a Fe-Si compound, an Mn-Si compound, a Co-Si compound, or a Cr-Si compound in the metallographic structure. Since these intermetallic compounds are extremely hard, they not only increase cutting resistance, but also shorten the tool life. Therefore, the content of each of Fe, Mn, Co, and Cr is required to be limited and is preferably lower than 0.30 mass%, more preferably lower than 0.20 mass%, and still more preferably 0.15 mass% or lower. In particular, the total content of Fe, Mn, Co, and Cr is required to be limited to lower than 0.45 mass% and is preferably 0.35 mass% or lower, more preferably 0.25 mass% or lower, and still more preferably 0.20 mass% or lower.

On the other hand, Sn and Al mixed in from free-cutting brass, plated waste products or the like promote formation of γ phase in an alloy according to an embodiment of the present invention, which is seemingly effective for machinability. However, Sn and Al change the inherent characteristics of γ phase comprising Cu, Zn, and Si. In addition, larger amounts of Sn and Al are distributed in β phase than in α phase causing characteristics of β phase to change. As a result, the alloy's ductility, toughness, or machinability may deteriorate. Therefore, it is necessary to limit the contents of Sn and Al, too. The Sn content is preferably lower than 0.40 mass%, more preferably lower than 0.30 mass%, and still more preferably 0.25 mass% or lower. The Al content is preferably lower than 0.20 mass%, more preferably lower than 0.15 mass%, and still more preferably 0.10 mass% or lower. In particular, from a viewpoint of influence on machinability and ductility, the total content of Sn and Al is required to be limited to lower than 0.45 mass%, preferably to 0.35 mass% or lower, more preferably to 0.30 mass% or lower, and still more preferably to 0.25 mass% or lower.

As other main inevitable impurity elements, empirically speaking, in many cases, Ni often mixes in from scraps of plated products and the like, but the influence on properties is less than that of Fe, Mn, Sn and the like. Even if a small amount of Fe or Sn mixes in, as long as the Ni content is lower than 0.4 mass%, the influence on the properties is limited. It is more preferable if Ni content is 0.2 mass% or less. It is not necessary to particularly limit the content of Ag because Ag is commonly considered as Cu and does not substantially affect various properties of an alloy. However, the Ag content is preferably lower than 0.1 mass%. Te and Se themselves have free-cutting ability, and contamination by a large amount of Te or Se may occur although it is rare. In consideration of the influence on ductility and impact resistance, each content of Te and Se is preferably lower than 0.2 mass%, more preferably 0.05 mass% or lower, and still more preferably 0.02 mass% or lower. In addition, corrosion-resistant brass includes As and/or Sb in order to improve its corrosion resistance. In consideration of the influence on ductility and impact resistance, each content of As and Sb is preferably 0.05 mass% or lower, more preferably 0.02 mass% or lower. With respect to Cd, As, and Sb, considering the influence on the environment and human body, Cd content is preferably 0.01 mass% or lower and more preferably 0.005 mass% or lower, and each content of As and Sb is preferably 0.05 mass% or lower and more preferably 0.02 mass% or lower.

The content of each of Mg, Ca, Zr, Ti, In, W, Mo, B, and rare earth elements as other elements is preferably lower than 0.05 mass%, more preferably lower than 0.03 mass%, and still more preferably lower than 0.02 mass%.

The content of the rare earth elements refers to the total content of one or more of the following elements: Sc, Y, La, Ce, Pr, Nd, Pm, Sm, Eu, Gd, Tb, Dy, Ho, Er, Tm, Tb, and Lu.

The total content of the inevitable impurities is preferably lower than 1.0 mass%, more preferably lower than 0.8 mass%, and still more preferably lower than 0.7 mass%.

(Composition Relational Expression f1)

The composition relational expression f1 = [Cu] - 4.7 × [Si] + 0.5 × [Pb] + 0.5 × [Bi] - 0.5 × [P] is an expression indicating a relationship between the composition and the metallographic structure. Even when the amount of each of the elements is in the above-described defined range, unless this composition relational expression f1 is not satisfied, the properties targeted in embodiments of the present invention cannot be obtained. When the composition relational expression f1 is lower than 56.7, even if the production process was modified, the proportion of β phase would increase, toughness and ductility would deteriorate, and corrosion resistance and stress corrosion cracking resistance would also deteriorate. Further, when machining is performed on a harsh cutting condition such as at a high speed or high feed, chip breakability deteriorates. Accordingly, the lower limit of the composition relational expression f1 is 56.7 or higher, preferably 57.0 or higher, and more preferably 57.2 or higher. As the value of the composition relational expression f1 comes to fall within a more preferable the range, the proportion of α phase increases, excellent chip breakability is maintained when machined at a high speed, and good ductility, cold workability, and favorable toughness at about 200°C can be obtained.

On the other hand, the upper limit of the composition relational expression f1 affects the proportion of β phase, generation of γ phase, and the range of temperature in which the alloy solidifies. When the composition relational expression f1 is higher than 59.7, the proportion of β phase decreases, and excellent machinability cannot be obtained. At the same time, γ phase sometimes appears, and in some cases, ϰ phase and/or μ phase appear. Then, the solidification temperature range exceeds 25°C and defects peculiar to castings such as porous shrinkage cavity and recess are more likely to appear. Accordingly, the upper limit of the composition relational expression f1 is 59.7 or lower, preferably 59.0 or lower, more preferably 58.8 or lower, and still more preferably 58.5 or lower.

In addition, with respect to hot workability performed at about 600°C, when the composition relational expression f1 is higher than 59.7, hot deformation resistance increases, and hot working at 600°C becomes difficult to perform.

A free-cutting copper alloy according to an embodiment of the present invention has machinability, a property that requires a kind of brittleness which allows generation of finely broken chips whose cross section has a zigzag shape, and good ductility and toughness, properties that are opposite to machinability. By discussing not only the composition but also the composition relational expressions f1, f2, and f3, the metallographic structure relational expression f4, and the composition and metallographic structure relational expression f5 in detail, an alloy more suitable for its purpose and use can be provided.

Incidentally, Sn, Al, Cr, Co, Fe, Mn, and inevitable impurities that are separately defined, are not defined by the composition relational expression f1 because their influence on the composition relational expression f1 is small if the content is within the range that can be treated as inevitable impurities.

(Composition Relational Expression f2)

In embodiments of the present invention, it is desired to obtain excellent machinability by including limited small amounts of Pb and Bi at a limited ratio. In order to concisely represent the effect of machinability improvement, it is not sufficient to define Pb and Bi individually. Therefore, these elements are defined with the composition relational expression f2 = [Pb] + [Bi].

In order to obtain excellent machinability, f2 is at least 0.003 or higher and preferably 0.005 or higher. When machining on a harsh condition, for example, at a high speed or high feed, f2 is more preferably 0.020 or higher and still more preferably 0.040 or higher. Regarding the upper limit of f2, the higher the value of f2, the better the machinability. In the embodiments, however, since the influence of Bi on the environment and human body is considered to be of the same level as that of Pb, it is necessary to limit the total content of Bi and Pb. Taking the influence into account, f2 is preferably lower than 0.25, more preferably lower than 0.15, still more preferably lower than 0.12, and even more preferably 0.10 or lower. The effect of $\beta$ phase of which machinability has been remarkably improved by Si contained, as described above, and also the effect of the inclusion of a small amount of P or the presence of P compounds are so tremendous, excellent machinability, in particular, chip breakability can be obtained even if the contents of Bi and Pb are small.

(Composition Relational Expression f3)

In order to obtain more favorable chip breakability with less contents of Pb and Bi, it is primarily important to add Pb and Bi together. By satisfying the relationship of $0.01 \leq f3 = [Bi]/([Pb] + [Bi]) \leq 0.98$, Pb can be present together with Bi (Pb and Bi are made into an alloy) in most of Pb particles. If Pb and Bi are present together, better chip breakability can be obtained than when Bi is contained alone, and the same or a higher effect than that when Pb is contained alone is exhibited. If $[Pb] + [Bi] < 0.08$, $0.02 \leq f3 = [Bi]/([Pb] + [Bi]) \leq 0.98$, preferably $0.02 \leq f3 = [Bi]/([Pb] + [Bi]) \leq 0.97$, and more preferably $0.03 \leq f3 = [Bi]/([Pb] + [Bi]) \leq 0.96$.

On the other hand, it was found that when Pb and Bi are added together, even though chip breakability improves as the contents of Pb and Bi increase, a phenomenon that the alloy embrittles at a temperature of about 200°C (about 180°C or higher) occurs. For excellent chip breakability, some kind of brittleness is required. In fact, among properties under normal temperature, toughness, that is one of the yardsticks of brittleness is lower than when Pb and Bi are not contained. When alloy is embrittled at a temperature of about 200°C, smooth discharge of chips is liable to be hindered during machining, or cracking is liable to occur to the material during processing if any impact is applied. In addition, if machined product is assembled into a product as a component, the product is exposed to a temperature close to 200°C, and any impact is applied to the product, cracking may occur. Accordingly, it is important to limit impact resistance that is one of the yardsticks of brittleness at about 200°C to a certain standard value or higher. As described below, the standard value for brittleness is 12 J/cm$^2$ or higher in an impact test where an alloy processed into a notched shape is heated to about 200°C then set onto an impact tester. In embodiments of the present invention, the total content of Pb and Bi is less than 0.25 mass% at most. An amount like this may sound very small, but when the total content of Pb and Bi is 0.08 mass% or more, brittleness at about 200°C is affected. Further, it was found that, the higher the total content of Pb and Bi, the more important strict management of the mixing ratio between Bi and Pb. As a result of diligent studies, it was determined that if $0.08 \leq [Pb] + [Bi] < 0.13$, $0.01 \leq f3 = [Bi]/([Pb] + [Bi]) \leq 0.40$ or $0.85 \leq f3 = [Bi]/([Pb] + [Bi]) \leq 0.98$. That is, by adjusting the proportion of Bi in the total content of Pb and Bi to 0.01 or more but 0.40 or less or to 0.85 or more but 0.98 or less, the influence on brittleness can be avoided. Further, if the total content of Pb and Bi is larger, that is, if $0.13 \leq [Pb] + [Bi] < 0.25$, the mixing ratio between Pb and Bi is limited to $0.01 \leq [Bi]/([Pb] + [Bi]) \leq 0.33$. As a result, the alloy can maintain favorable toughness at about 200°C. It is preferable that, if $0.08 \leq [Pb] + [Bi]$, $0.02 \leq f3 = [Bi]/([Pb] + [Bi]) \leq 0.33$. It is more preferable that, if $0.08 \leq [Pb] + [Bi]$, $0.02 \leq f3 = [Bi]/([Pb] + [Bi]) \leq 0.25$. When importance is placed on brittleness at 200°C, it is still more preferable that the content of Bi is limited to less than 0.020 mass% irrespective of the content of Pb+Bi.

(Comparison with Patent Documents)

Here, the results of comparison between the compositions of the Cu-Zn-Si alloys described in Patent Documents 1 to 14 and those of embodiment alloys of the present invention are shown in Tables 1 and 2.
The embodiments and the alloys disclosed by Patent Documents 1 and 12 are different from each other in the Sn content, and in these Documents, a large amount of Bi is required in effect.
The embodiments and the alloys disclosed by Patent Documents 2 to 9 are different from each other in the contents of Cu and Si, the main elements of the alloys. In the Patent Documents, a large amount of Cu is required. Also, $\gamma$ phase or $\kappa$ phase is defined to be an indispensable metallic phase.
In Patent Documents 2 to 4 and 7 to 9, $\beta$ phase is depicted as a metallic phase that is not preferable in a metallographic structure because it impairs machinability. They also disclose that when $\beta$ phase is present, it is preferable to change $\beta$ phase into $\gamma$ phase having excellent machinability through a heat treatment.
In Patent Documents 4 and 7 to 9 in which an allowable amount of $\beta$ phase is described, the maximum area ratio of $\beta$ phase is 5%.
In Patent Document 10, the content of each of Sn and Al is at least 0.1 mass% or higher in order to improve dezincification corrosion resistance, and large amounts of Pb and Bi need to be included in order to obtain excellent machinability.
Patent Document 11 describes a copper alloy casting having corrosion-resistance which requires higher than or equal to 65 mass% Cu and has excellent mechanical characteristics and castability achieved by including Si and a small amount of Al, Sb, Sn, Mn, Ni, B, or the like.
Patent Document 14 discloses an alloy that does not contain Bi, but contains Sn in an amount of 0.20 mass% or higher, and hot extrusion is performed after it is held at a high temperature of 700°C to 850°C.

Further, none of these Patent Documents disclose or imply anything about (1) β phase including Si that is an essential requirement of the embodiments has excellent machinability, (2) β phase is required in an amount at least 17% or more, (3) containment of P is effective to improve the machinability of β phase, and further, fine compounds of P and Si and/or Zn are present in β phase, (4) Bi exhibits an effect of improving machinability even when its content is less than 0.10 mass%, and if added together with a small amount of Pb, a higher effect can be obtained, (5) if both Pb and Bi are added, chip breakability improves when the alloy is machined at a high speed and/or high feed. In addition, none of them discloses about the blending ratio between Pb and Bi. Further, that γ phase is not contained in the embodiments is also a significant difference from Patent Documents 1 to 14.

Table 1

| | Cu | Si | P | Pb | Bi | Sn | Al | Others |
|---|---|---|---|---|---|---|---|---|
| First Embodiment | 59.7-64.7 | 0.60-1.30 | 0.001-0.15 | 0.001-0.20 | 0.001-0.10 | Sn+Al<0.45, Fe+Mn+Cr+Co<0.45 | | |
| Second Embodiment | 60.5-64.0 | 0.75-1.25 | 0.005-0.10 | 0.002-0.15 | 0.002-0.05 | Sn+Al≤0.35, Fe+Mn+Cr+Co≤0.35 | | |
| Patent Document 1 | 59.5-66.0 | - | - | - | 0.5-2.0 | 0.7-2.5 | - | - |
| Patent Document 2 | 69-79 | 2.0-4.0 | 0.02-0.25 | - | 0.02-0.4 | 0.3-3.5 | 0.1-1.5 | - |
| Patent Document 3 | 69-79 | 2.0-4.0 | 0.02-0.25 | 0.02-0.4 | 0.02-0.4 | 0.3-3.5 | 0.1-1.5 | - |
| Patent Document 4 | 71.5-78.5 | 2.0-4.5 | 0.01-0.2 | 0.005-0.02 | 0.01-0.2 | 0.1-1.2 | 0.1-2.0 | - |
| Patent Document 5 | 74.5-76.5 | 3.0-3.5 | 0.04-0.10 | 0.01-0.25 | 0.01-0.4 | 0.05-0.2 | 0.05-0.2 | Fe: 0.11-0.2 |
| Patent Document 6 | 70-83 | 1-5 | 0.1 or less | - | - | 0.01-2 | - | Fe, Co: 0.01-0.3 Ni: 0.01-0.3 Mn: 0.01-0.3 |
| Patent Document 7 | 73.0-79.5 | 2.5-4.0 | 0.015-0.2 | 0.003-0.25 | - | 0.03-1.0 | 0.03-1.5 | - |
| Patent Document 8 | 73.5-79.5 | 2.5-3.7 | 0.015-0.2 | 0.003-0.25 | 0.003-0.30 | 0.03-1.0 | 0.03-1.5 | - |
| Patent Document 9 | 75.4-78.0 | 3.05-3.55 | 0.05-0.13 | 0.005-0.070 | 0.005-0.10 | 0.05 or less | 0.05 or less | - |
| Patent Document 10 | 55-75 | 0.01-1.5 | less than 0.15 | 0.01-4.0 | 0.01-4.0 | 0.1 or more | 0.1 or more | - |
| Patent Document 11 | 65-75 | 0.5-2.0 | - | - | - | 0.01-0.55 | 0.1-1.0 | - |
| Patent Document 12 | 61.0-63.0 | 0.05-0.30 | 0.04-0.15 | 0.01 or less | 0.5-2.5 | 1.5-3.0 | - | Sb: 0.02-0.10 |
| Patent Document 13 | - | 0.25-3.0 | - | - | - | - | - | - |
| Patent Document 14 | 60.0-66.0 | 0.01-0.50 | 0.15 or less | 0.05-0.50 | - | 0.20-0.90 | - | Fe: 0.60 or less |

Table 2

| | Metallographic Structure |
|---|---|
| First Embodiment | 17≤β≤75 |
| Second Embodiment | 30≤β≤64 |
| Patent Document 1 | α+γ structure or α+β+γ structure |
| Patent Document 2 | γ phase, in some cases, κ phase is present. β phase is turned into γ phase by heat treatment. |
| Patent Document 3 | γ phase, in some cases, κ phase is present. β phase is turned into γ phase by heat treatment. |
| Patent Document 4 | 18-500Pb≤κ+γ+0.3μ-β≤56+500Pb, 0≤β≤5 |
| Patent Document 5 | - |
| Patent Document 6 | - |
| Patent Document 7 | 30≤α≤84, 15≤κ≤68, β≤3, etc. |
| Patent Document 8 | 60≤α≤84, 15≤κ≤40, β≤2, etc. |
| Patent Document 9 | 29≤κ≤60, β=0, etc. κ phase is present in α phase. |
| Patent Document 10 | - |
| Patent Document 11 | - |
| Patent Document 12 | - |
| Patent Document 13 | - |
| Patent Document 14 | - |

<Metallographic Structure>

In a Cu-Zn-Si alloy, 10 or more kinds of phases are present, a complicated phase change occurs, and desired properties cannot be necessarily obtained simply by satisfying the composition ranges and the relational expressions of the elements. Ultimately, by specifying and determining the kinds of metallic phases present in the metallographic structure and the area ratio ranges thereof, desired properties can be obtained. Therefore, the metallographic structure relational expression f4 and the composition and metallographic structure relational expression f5 are defined as follows.

The following mathematical expression indicates that in terms of metallic phase, there are only two constituent phases that are α phase and β phase.

$$(\alpha) + (\beta) = 100$$

$$17 \leq f4 = (\beta) \leq 75$$

$$7.0 \leq f5 = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3 \leq 16.0$$

(β phase, Metallographic Structure Relational Expression f4)

In order to obtain excellent machinability without γ phase, κ phase, or μ phase, the Si amount being appropriate, the blending ratio between Cu and Zn, the amount of β phase, and containment of an appropriate amount of P or presence of P compounds are important. Incidentally, it should be noted that β phase includes β' phase.

β phase of an alloy whose composition falls within a composition range according to an embodiment of the present invention has lower ductility than α phase but has much higher toughness and ductility than γ phase. Compared with the κ phase or μ phase of a Cu-Zn-Si alloy, it has better toughness and ductility, too. Accordingly, from a viewpoint of toughness and ductility, a relatively large amount of β phase can be included. In addition, β phase can obtain excellent conductivity although it includes high concentrations of Zn and Si. The amount of β phase is significantly affected not only by the composition but also by the process.

In a Cu-Zn-Si-P-Pb-Bi alloy, a free-cutting copper alloy according to an embodiment of the present invention, in order to obtain excellent machinability while minimizing the contents of Pb and Bi, β phase whose machinability has been significantly improved by the effect of Si contained is required to be at least 17% or higher by area ratio. That is, the proportion of β phase needs to be at least more than one fifth of the area ratio of α phase. The area ratio (amount) of β phase is preferably 25% or more, more preferably 30% or more, and still more preferably 35% or more. For example, even when the amount of β phase is about 40% and the proportion of α phase having low machinability is about 60%, machinability is maintained at a high level even compared with a β single-phase alloy containing Si. In addition, when β phase containing Si and P and having improved machinability and soft α phase having poor machinability are present together, it is presumed that soft α phase functions like a cushioning material. Alternatively, it is presumed that moderately fragmented β phase by the presence of α phase or phase boundary of β phase functions as a stress concentration source, that is, makes an origin of chip breakage during machining. Even when the amount of β phase is about 40%, excellent machinability is maintained, and chip breakability is rather maintained than deteriorated in the case of high-speed machining.

On the other hand, when machining is performed where the machining temperature is low (about 100°C) such as in the case of low-speed machining, β single-phase alloy containing Si exhibits extremely high machinability or chip breakability. However, when machining temperature is increased due to high machining speed and the like, the excellent chip breakability of β phase starts to be impaired. That is, chip breakability of β single-phase alloy containing Si is impaired when machining temperature increases to about 200°C. Here, in order to prevent the loss of the machinability-improvement function of β phase, an appropriate amount of α phase containing Si becomes required since such α phase has higher heat resistance than β phase even though its machinability is poor. Further, β single-phase alloy has poor ductility and toughness. Therefore, in order also to have the alloy secure sufficient ductility and toughness, α phase is required in an appropriate amount since it has excellent ductility and toughness. For the reasons stated above, the amount of β phase is 75% or less, that is, α phase is required at a proportion of 25% or more, and the amount of β phase is preferably 64% or less and more preferably 58% or less.

Incidentally, β phase including about 1 mass% Si exhibits properties that are beneficial in alloy production. Specifically, excellent hot deformability and low hot deformation resistance are exhibited when the hot working temperature is 500°C (the lowest level of hot working temperature) or higher. An alloy having such β phase exhibits excellent hot deformability and low hot deformation resistance.

(Composition and Metallographic Structure Relational Expression f5)

The composition and metallographic structure relational expression f5 is an expression involving composition and metallographic structure for obtaining generally excellent machinability and mechanical characteristics, in addition to the composition relational expressions f1 to f3 and the metallographic structure relational expression f4.

In a Cu-Zn-Si-P-Pb-Bi alloy, the machinability is affected by an aggregate effect brought by the total content of Pb and Bi (f2), the amounts of β phase and Si, the amount of P, and the presence of P-containing compounds. In consideration of the amounts of Pb and Bi and their influences on machinability, the effect of Pb and Bi on machinability can be represented by $([Bi] + [Pb] - 0.001)^{1/2}$.

The least total content of Pb and Bi necessary to exhibit their effect on the machinability is 0.003 mass%. That is, they are already effective when such an amount is contained. $([Bi] + [Pb] - 0.001)^{1/2}$ is a value obtained by subtracting 0.001 mass% from the total content of Pb and Bi, *i.e.,* $([Bi] + [Pb] - 0.001)$, raised to the power of 1/2.

Regarding the amounts of β phase and Si, when the amount of β phase is about 8%, β phase starts to exhibit its effect of improving chip breakability. As to Si, it starts to be effective when the Si content is 0.2 mass%. The degree of the effects can be represented by the product of $((\beta) - 8)^{1/2}$ and $([Si] - 0.2)^{1/2}$. Further, the degree of the effects can be represented by $((\beta) - 8)^{1/2} \times ([Si] - 0.2)^{1/2} \times 1.3$ obtained by multiplying the product of $((\beta) - 8)^{1/2}$ and $([Si] - 0.2)^{1/2}$ by a coefficient of 1.3. With respect to the effect of P on machinability, it can be represented by $([P] - 0.001)^{1/2}$ in consideration of the amount of P solid solubilized in β phase and the presence of P-containing compounds. The least amount of P necessary to exhibit the effect is 0.001 mass%. $([P] - 0.001)^{1/2}$ is a value obtained by subtracting 0.001 mass% from the P content [P], $([P] - 0.001)$, raised to the power of 1/2.

f5 is obtained by multiplying the elements of the respective effects by the coefficients derived from the results of diligent studies. As to the effect on machinability, f5 is not satisfied unless all the requirements are met. The following expression f5 is an expression that represents the aggregate actions of Pb+Bi, P, and Si corresponding to their respective concentrations.

$$f5 = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3$$

In order to obtain excellent machinability and chip breakability, and high strength, f5 is required to be at least 7.0 or higher, preferably 8.0 or higher, and more preferably 8.5 or higher. In particular, when machining conditions are severe, f5 is preferably 9.0 or higher, more preferably 9.5 or higher, and still more preferably 10.0 or higher. On the other hand, the upper limit of f5 is 16.0 or lower and preferably 14.0 or lower in view of the influence on the environment and human body as well as toughness and ductility at normal temperature and about 200°C. From a perspective of reducing the value of the term $([Bi] + [Pb])^{1/2}$, the upper limit of f5 is more preferably 13.5 or lower and still more preferably 13.0 or lower. By controlling the composition and the metallographic structure such that they fall in the above-described narrow ranges, reducing the content of Pb + Bi, and appropriately adjusting the mixing ratio between Pb and Bi described below, an alloy having excellent machinability, chip breakability, high strength, and favorable toughness at normal temperature and about 200°C is completed.

Incidentally, in the metallographic structure relational expression f4 and the composition and metallographic structure relational expression f5, the only subjects are metallic phases, and intermetallic compounds, Pb particles, Bi particles, oxides, nonmetallic inclusions, non-melted materials, and the like that are present in the metallographic structure are not. That is, they are excluded from the subjects of area ratio calculation. In embodiments of the present invention, metallic phases having a size that can be clearly observed with a 500X metallographic microscope are the subjects. Accordingly, the minimum size of a metallic phase that can be observed is about 2 μm, which corresponds to about 1 mm when observed with such a microscope. In the case of precipitates, their presence can be recognized with a microscope if they have a dimension of about 0.2 mm, but in the case of metallic phases, it is difficult to distinguish them if they are as small as that. Accordingly, γ phase whose dimension is less than 2 μm that may be present in β phase is regarded as part of β phase since such γ phase cannot be recognized with a metallographic microscope.

(α phase, Metallographic Structure Relational Expression f3)

α phase is a phase forming the matrix together with β phase. In the case of embodiments of the present invention, the metallographic structure is composed of two phases that are α phase and β phase. Therefore, 100 - (β) represents the area ratio of α phase. In other words, the balance of β phase is α phase. α phase containing Si has slightly better machinability than that without Si and has excellent ductility. In addition, by containing a small amount of Si in α phase, heat resistance is improved. When β phase accounts for 100%, the alloy has problems with the ductility and toughness, and also with machinability and chip breakability in the case machining temperature is increased. Therefore, an appropriate amount of α phase having improved heat resistance is required. It is considered that even if a β single-phase alloy comes to include a relatively large amount of α phase, for example, about 50% in terms of area ratio, excellent machinability of the β single-phase alloy is maintained since α phase itself functions as a cushioning material during machining, which further promotes stress concentration on β phase and improves chip breakability, and the problems related to β phase in the case machining temperature is increased due to high-speed machining and the like is, in turn, complemented.

(γ phase, μ Phase, κ Phase, and Other Phases)

In order to obtain excellent machinability and chip breakability as well as high ductility or toughness, and high strength, whether phases other than α and β phases is present important, and it is desirable that phases other than α and β phases are not present. In embodiments of the present invention, basically, the metallographic structure is composed of two phases that are α phase and β phase. It should be noted, however, that, in the embodiments, the phases other than α and β phases are defined to be those that can be clearly observed and distinguished with a microscope with 500X magnification as described above. In the case of metallic phases, unlike Pb particles or P compounds, even if a phase that is smaller than about 2 μm was present, it would not seriously affect the alloy's properties.

(Presence of P-Containing Compounds)

By including Si, the machinability of β phase is significantly improved, and by containing P and solid-solubilization of P in β phase, it is further improved. In addition, by causing a compound formed with P having a particle size of about 0.1 to about 3 μm and Zn and/or Si to be present in β phase, the chip breakability of β phase can be further improved. Regarding the machinability of a β single-phase alloy containing about 0.06 mass% P and about 1 mass% Si but without Pb or Bi, when the machining temperature is low, chip breakability is significantly improved by solid-solubilization of P and presence of P-containing compounds as compared to a β single-phase alloy to which P is not added. The size of P-containing compounds is substantially the same as that of Pb particles, and even though P-containing compounds and Pb particles have a particle size of about 0.1 μm, they function as stress concentration sources during machining and, in terms of microstructure, promote shear fracture causing rectilinear fracture to advance and improving chip breakability.

P-containing compound is a compound including P and at least either or both of Zn and Si. In some cases, it further includes Cu and/or inevitable impurities such as Fe, Mn, Cr, or Co. P-containing compound is affected by inevitable impurities such as Fe, Mn, Cr, and Co, too. When the concentration of the inevitable impurities exceeds the aforementioned defined amount, the composition of P-containing compound changes such that P-containing compound may no longer contribute to improvement of machinability. Incidentally, P-containing compounds are not present at a hot working temperature of about 600°C. They are formed at a critical cooling rate during cooling after hot working. Accordingly, the cooling rate after hot working is important, and it is desirable that cooling is performed at an average cooling rate of 70°C/min or lower in the temperature range from 530°C to 440°C. Although depending on the amount of P, they are present as P compounds having a dimension of about 0.3 μm or more which can be distinguished with a microscope. On the other hand, when the cooling rate is excessively low, P-containing compounds are likely to grow bigger, which causes the effect on machinability to decrease. The lower limit of the average cooling rate in the above-mentioned temperature range is preferably 0.1°C/min or higher and more preferably 0.3°C/min or higher. The upper limit of the cooling rate, 70°C/min, varies depending on the amount of P. When a large amount of P is contained, P-containing compounds are formed even when cooling is performed at a higher cooling rate.

(Chip Breakability and Chip Shape Index f6: H2/H1)

As a method for evaluating chip breakability, first, cross section of a chip to be evaluated is observed according to the following procedure. When the alloy is lathed (turned) with a tool (blade), assuming that the direction in which chips are produced (direction in which chips are discharged) is the longitudinal direction, embed the chip in a resin perpendicular to the transverse direction of the chip (such that the chip stands vertically on its end in the transverse direction), polish the chip embedded in the resin, then observe a cross section of the chip with a microscope. One of the characteristics of an alloy having good chip breakability is that the cross section of a chip produced from the alloy has a zigzag shape. Specifically, the free surface side of the cross section is zigzagged. Further, observing its microstructure, rectilinear fracture that is peculiar to shear fracture is found on the free surface side (the side that is opposite to the side that came in contact with the tool) of the chip. As a characteristic when chip breakability is improved, fracture spreads rectilinearly from the free surface side through to the bottom surface (the surface which came in contact with the tool, or the machined surface). Depending on whether chip breakability is good or bad, the appearance of chip's cross section is varied - one type has superficial spikes, the other has clear-cut rectilinear shearing that reaches through to the bottom (the surface that came in contact with the tool, or machined surface). Another type is one that appears as if the chip was separated by shear fracture. In this case, each of its protrusions has a near trapezoidal shape. Convex portions jutting toward the free surface and concave portions dented toward the machined surface are alternately positioned in the longitudinal direction of the chip. For the purpose of evaluating breakability of this sort of chips, when an average height from the bottom surface (machined surface) to the tips of the convex portions (height of the convex portion) is represented by HI, and an average distance from the bottom surface (machined surface) to the deepest points of the concave portions (height of the concave portion) is represented by H2, f6 = H2/H1 is defined as an index representing chip breakability. In addition, the average of H2 and HI, that is, the average chip thickness (average chip height) is also measured and defined as an index representing chip breakability (f6A= (HI + H2)/2).

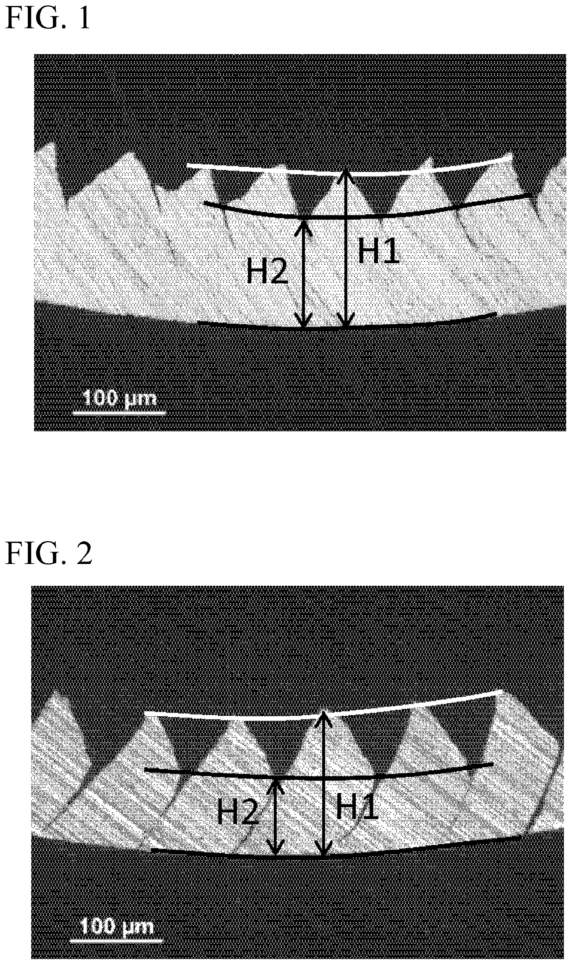

Figs. 1 and 2 show typical cross sections of chip. The average height of the convex portion H1 and the average height of the concave portion H2 are indicated by lines although the lines were drawn as viewed. In Figs. 1 and 2, the horizontal axis direction is the longitudinal direction of the chip. The lower surface (bottom surface) of the chip is the surface that came in contact with the tool (machined surface). The upper surface of the chip is the free surface, or the reverse side of the machined surface.

The product of the average chip thickness and the strength of the material is closely related to cutting resistance the thinner the average chip thickness, the lower the cutting resistance. Most copper alloys other than brass containing 3 mass% Pb, do not produce chips having a zigzag shape. Instead, they produce thick chips having a less uneven surface. Therefore, their chip breakability is poor. This sort of chip will be referred to as a "flow type chip". In order to break a chip with a cutting tool, f6 needs to be 0.80 or lower. For example, by using a tool to which a common chip breaker is attached, chips get broken easily. In order to make chips more easily broken, f6 is preferably 0.65 or lower and more preferably 0.60 or lower. On the other hand, when f6 is lower than 0.25, acicular chips are produced, which is not preferable. The length of the chip in the longitudinal direction needs to be at least about 0.5 mm or more. To that end, f6 needs to be 0.25 or more and preferably 0.35 or more. The most favorable range of f6 is between 0.40 and 0.55. When f6 is in this range, chips are easily broken, and acicular chips are less likely to be produced. Cross section of such chips has a regular zigzag shape. In other words, f6 represents the ratio between the distance from the machined surface to the tip of a convex portion on the zigzag side and the distance from the machined surface to the bottom of a concave portion on the zigzag side. In addition, the bottom surface (machined surface) of chip needs to be smooth as shown in Figs. 1 and 2 since this is the surface that came in contact with the tool during machining, that is, the surface that faced the blade of the tool. Incidentally, in terms of microstructure, that chips whose cross section has a zigzag shape are produced indicates that, β phase containing Si and P, P compounds present in β phase, and Pb particles made stress concentration sources during machining and regular rectilinear shear fractures occurred instantaneously and regularly. For example, when the cutting speed is 172 m/min, as many as about 20,000 protrusions having a near trapezoidal shape are generated per second forming a regular zigzag shape (dents and spikes) on the free surface side. In addition, as described above, average chip thickness is closely related to cutting resistance and is linked with feed. Although depending on the cutting conditions including the cutting tool used, in the case of an alloy having excellent machinability, the average chip thickness is about 0.9 to about 1.8 times, preferably about 1.0 to about 1.7 times the value of the feed f (hereinafter, referred to as the feed f or the value of f). According to the results of a comparative testing of embodiments of the present invention, in the case of brass containing 3% Pb, the average chip thickness is about 1.1 times the value of f as described below.

(Cross-Sectional Shapes of Chips of Brass, β Brass, and Brass containing 3 mass% Pb)

Although details of the experiment method will be described later, a cutting test was performed under the following sets of conditions: a cutting speed of 40 m/min, a feed of 0.11 mm/rev, and a cutting depth of 1.0 mm; and a cutting speed of 172 m/min, a feed of 0.21 mm/rev, and a cutting depth of 2.0 mm. The alloys of the test samples were α brass (65 Cu-35 Zn), β brass (54 Cu-46 Zn), β brass containing 1 mass% Si (58.5 Cu-1 Si-40.5 Zn), β brass containing 1 mass% Si and 0.06 mass% P (58.5 Cu-1 Si-0.06 P-40.44 Zn), and brass containing 3 mass% Pb (58.8 Cu-3.1 Pb-Zn). The results of the observation of the cross sections of the chips that was performed after the cutting test are shown in Table 22.

When the cutting speed was 40 m/min and the feed was 0.11 mm/rev, in the case of α brass, f6 was 0.98 and f6A was 0.44. f6 exceeded the defined range, and the average chip thickness was 4.0 times the feed f.

In the case of β brass, f6 was 0.9 and f6A was 0.29. Compared to the α brass, β brass' chips were slightly more broken and thinner. However, its f6 value was outside the range of the embodiments of the present invention, the average chip thickness was 2.6 times the feed f, chip breakability was insufficient, and the average chip thickness was also large.

In the case of β brass containing 1 mass% Si, due to the action of Si contained, f6 and f6A, indicators of chip breakability, were much better than those of the Si-free β brass. In the case of β brass containing 1 mass% Si and 0.06 mass% P, f6 and f6A were further improved and were the same as those of the brass containing 3 mass% Pb. Thus, by adding 1 mass% Si and also 0.06 mass% P, a β brass became able to generate substantially the same chips as those of a brass containing 3 mass% Pb without containing Pb or Bi. However, when machining was performed at a cutting speed of 172 m/min and a feed of 0.21 mm/rev, the value of f6, an indicator of chip breakability, increased and the thickness of chips also increased. In the β brass containing 1 mass% Si and 0.06 mass% P, f6 reached 0.82, and chip breakability was impaired. In addition, the chip thickness reached 1.7 times the value of f. In order to overcome the problem, as described above, an appropriate amount of α phase is contained, and Pb and Bi play more important roles.

(Toughness, Balance between Strength and Toughness, f7)

Brass containing 3% Pb has excellent machinability but its impact value, a yardstick of toughness, is lower than that of lead-free brass. In alloys according to an embodiment of the present invention, even though the contents of Pb and Bi are small, the impact value, which is related to toughness under normal temperature, is lower than that of lead-free brass partly due to a high amount of β phase contained. It is also to note that a material that has good chip breakability and produces chips whose cross section has a zigzag shape and rectilinear fracture like shear fracture at least has a brittle aspect. The objective of the embodiments of the present invention is to provide an alloy containing small amounts of Pb and Bi and having excellent chip breakability and a good balance between toughness and ductility, which are properties contrary to chip breakability. Regarding toughness, when a Charpy impact test is performed at room temperature (for example, 10°C to 30°C) using specimen with a U-shaped notch, there is no significant problem in actual use as long as the resultant impact value, (1-1), is 15 J/cm$^2$ or higher. The impact value at room temperature (normal temperature), (I-1), is preferably 20 J/cm$^2$ or higher. When cold working is performed after hot working, the impact value decreases. In the case of a hot-extruded material, a hot-forged material, or a casting on which cold working is not performed, the impact value at normal temperature, (I-1), is preferably 25 J/cm$^2$ or higher. Regarding toughness at about 200°C, which is one of the challenges of the embodiments, when a Charpy impact test is performed using test specimens with a U-shaped notch heated to 200°C for 20 minutes, the impact value, (1-2), is preferably 12 J/cm$^2$ or higher and more preferably 15 J/cm$^2$ or higher. When the impact value at 200°C, (1-2), is the preferable numerical value or higher, there is no problem at machining or during actual use. The procedure of this impact test is that test specimens are heated to 200°C in a furnace, and set in a tester, then an impact is applied. The test is to be performed within 5 to 20 seconds after completion of heating. Therefore, the actual temperature is about 10°C lower than 200°C. Even so, this method is defined to be the test method of the embodiments. In addition, one yardstick of brittleness at about 200°C is the temperature sensitivity of impact value f8 = (I-2)/(I-1), that is, f8 = (Impact Value at 200°C)/(Impact value at Normal Temperature). The value of (I-2)/(I-1) is preferably at least 0.5 or higher, more preferably 0.65 or higher, and still more preferably 0.8 or higher. The lower the impact test value at 200°C compared with that at normal temperature, the higher the sensitivity of brittleness at 200°C. It should be noted, however, that the impact value when heated to 200°C, (1-2), takes precedence.

The embodiments aim at obtaining a high strength and a good balance between strength, toughness, and ductility. As a yardstick of strength, Vickers hardness (HV) is adopted, and as a yardstick of toughness, value of Charpy impact test using specimen with a U-shaped notch, (I-1), is adopted in the embodiments. In addition, as preconditions, the Charpy U-notch impact test value at normal temperature, (1-1), is 15 J/cm$^2$ or higher, and the Vickers hardness (HV) is 110 or higher. The product of the value obtained by raising the impact value at normal temperature, (I-1), to the power of 1/2 and the Vickers hardness (HV) is defined as a characteristic relational expression of f7. Excellent balance between strength and toughness is defined as f7 = (I-1)$^{1/2}$ × (HV) being at least 550 or higher, preferably 600 or higher, and more preferably 650 or higher. Note that due to the shape of the specimen used for the Charpy impact test, bars having a diameter of, for example, less than 15 mm cannot be evaluated.

Incidentally, targeted applications of the embodiments are electrical or electronic components. Therefore, preferable electrical conductivity is at least 13% IACS or higher which is more preferably 15% IACS or higher. The upper limit of the conductivity is not particularly defined because an increase in conductivity does not cause any problem in actual use.

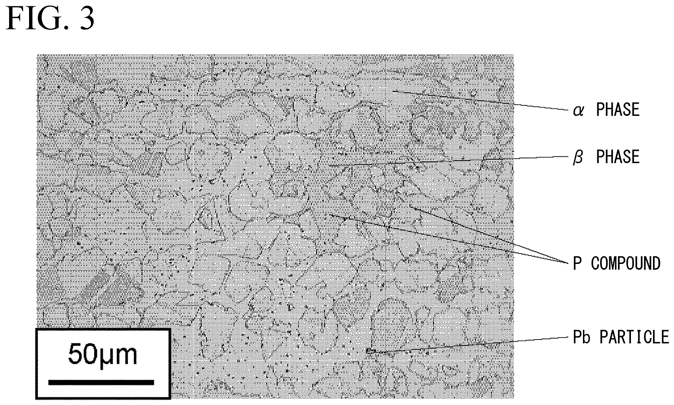

Fig. 3 shows a picture of the metallographic structure of a free-cutting alloy of Test No. T27 which is an embodiment of the present invention.

The alloy of Test No. T27 is an alloy obtained by performing Step No. F1 on Alloy No. S02. Alloy No. S02 is an alloy of Zn-62.1 mass% Cu-0.91 mass% Si-0.071 mass% P-0.068 mass% Pb-0.030 mass% Bi. In Step No. F1, hot forging was performed at 620°C, and the average cooling rate in the temperature range from 530°C to 440°C was 28 °C/min.

As shown in Fig. 3, granular α phase crystal grains having an average crystal grain size of about 20 μm and Pb particles having a particle size of about 1 to 2 μm present in the α phase crystal grains were observed with a metallographic microscope. P-containing compounds having a particle size of about 0.3 to 1.5 μm were observed in β phase.

(Hot Workability)

Free-cutting copper alloys according to an embodiment of the present invention have a characteristic that it has excellent deformability at about 600°C. They can be hot-extruded into a bar having a small cross-sectional area or hot-forged into a complex shape. When high deformation is performed on a leaded copper alloy at about 600°C, a large crack is formed. Therefore, an appropriate hot extrusion temperature range is 625°C to 800°C, and an appropriate hot forging temperature range is 650°C to 775°C. A free-cutting copper alloy according to an embodiment of the present invention, however, has a characteristic that it does not crack when hot working is performed at 600°C at a working ratio of 80% or higher. A preferable hot working temperature for a free-cutting copper alloy according to an embodiment of the present invention is a temperature lower than 650°C and more preferably lower than 625°C.

In a free-cutting copper alloy according to an embodiment of the present invention, deformability at 600°C is improved and deformation resistance is reduced due to inclusion of Si. Since the proportion of β phase is high, hot working can be easily performed at 600°C.

Since the hot working temperature is about 600°C, a temperature lower than a hot working temperature of conventional copper alloys, tools such as extrusion die for hot extrusion, containers of extruder, and metal molds for forging are heated to 400°C to 500°C before use. The smaller the difference in temperature between the tools and the hot worked material, the more homogeneous the metallographic structure, the better the dimensional accuracy of the hot worked material, and the longer the tool life because tool temperature hardly increases. In addition, a material having a high strength and a good balance between strength and elongation can be obtained.

<Production Process>

Next, a method for producing free-cutting copper alloys according to the first and second embodiments of the present invention will be described.

The metallographic structure of an alloy according to an embodiment of the present invention varies not only depending on the composition but also depending on the production process. The metallographic structure of the alloy is affected not only by hot working temperature in hot extrusion or hot forging and heat treatment conditions but also by the average cooling rate in the process of cooling after hot working or heat treatment. As a result of diligent studies, it was found that the metallographic structure is affected by the cooling rate in the temperature ranges from 530°C to 440°C and from 400°C to 200°C in the process of cooling after casting, hot working, or heat treatment.

(Melting, Casting)

Melting is performed at about 950°C to about 1200°C, a temperature that is about 100°C to about 300°C higher than the melting point (liquidus temperature) of an alloy according to an embodiment of the present invention. A molten alloy at a temperature of about 900°C to about 1100°C, a temperature that is about 50°C to about 200°C higher than the alloy's melting point, is cast into a predetermined mold and is cooled by several cooling means such as air cooling, slow cooling, or water cooling. After the alloy solidifies, constituent phases change in various ways.

(Casting)

To obtain a casting, the processes through to melting and pouring described above are performed, then the molten alloy is poured into a sand mold or a metal mold having a predetermined shape. In some cases, the resultant casting may be the final product. In addition, bar-shaped castings may be prepared by continuously pouring the molten alloy. When hot working is performed in the next step, the following production conditions are unnecessary. When the casting makes the final product, the following cooling is recommended as a preferred embodiment.

In the process of cooling after pouring, cooling is performed with the average cooling rate in the temperature range from 530°C to 440°C set at 70°C/min or lower, more preferably 55°C/min or lower, and still more preferably 45°C/min or lower. Although depending on the P concentration, by controlling the cooling rate, P-containing compounds having a particle size of about 0.1 to 3 $\mu$m are precipitated in $\beta$ phase, and thus the machinability of the alloy can be improved. In order to suppress the coarsening of the compounds in the process of cooling, it is preferable to set the lower limit of the average cooling rate at 0.1 °C/min or higher and more preferably 0.3 °C/min or higher.

After the material's temperature further drops, it is preferable to limit the cooling rate in the temperature range from 400°C to 200°C. In particular, when the Si content is 1 mass% or more, although depending on the Cu concentration or the like, if the average cooling rate in the above-described temperature range is low, $\gamma$ phase may precipitate. Therefore, the average cooling rate is preferably 5°C/min or higher and more preferably 10°C/min or higher. The average cooling rate in this temperature range does not affect the amount of $\alpha$ phase or $\beta$ phase, but better chip breakability, strength, and toughness can be obtained if cooled at a higher cooling rate. Therefore, the average cooling rate in the temperature range from 400°C to 200°C is more preferably 75 °C/min or higher. It is not particularly necessary to set an upper limit, but as the effect brought by cooling rate peaks out when the cooling rate is 500°C/min, the upper limit of the cooling rate is defined to be 500°C/min. Incidentally, the cooling rate for the temperature range from 440°C to 400°C is not particularly important since this temperature range is merely a transitional one to the temperature range from 400°C to 200°C.

(Hot Working)

Examples of hot working include hot extrusion, hot forging, and hot rolling. Each of these processes is explained below. When two or more hot working steps are performed, the final hot working step is performed under the following conditions.

(1) Hot Extrusion

First, regarding hot extrusion, in a preferred embodiment, although depending on extrusion ratio (hot working ratio) and facility capacity, hot extrusion is performed such that the material's temperature when it is being hot worked, specifically, immediately after the material passes through the extrusion die (hot working temperature) is higher than 530°C and lower than 650°C. The lower limit of the hot extrusion temperature relates to hot deformation resistance, and the upper limit thereof relates to the shape of $\alpha$ phase. By controlling the hot extrusion temperature such that it falls within a narrower temperature range, a stable metallographic structure can be obtained. When hot extrusion is performed at 650°C or higher, the shape of $\alpha$ phase crystal grains is likely to be acicular instead of granular, or large $\alpha$ phase crystal grains having a diameter of more than 50 $\mu$m are likely to appear. When acicular or large $\alpha$ phase crystal grains appear, the strength slightly decreases and the balance between strength and ductility slightly deteriorates. In addition, distribution of P-containing precipitates becomes slightly less uniform, and the machinability slightly deteriorates because $\alpha$ phase crystal grains having a large longer side and large $\alpha$ phase crystal grains hinder machining. The shape of $\alpha$ phase crystal grains relates to the composition relational expression f1 and extrusion temperature, and when the composition relational expression f1 is 58.0 or lower, the extrusion temperature is preferably lower than 625°C. By performing extrusion at a temperature lower than the temperature at which leaded copper alloys are extruded, better machinability and high strength can be obtained.

Further, by adjusting the cooling rate after hot extrusion, a material having more excellent machinability can be obtained. Specifically, cool the alloy in the temperature range from 530°C to 440°C in the process of cooling after hot extrusion at an average cooling rate of 70°C/min or lower, more preferably 55°C/min or lower, and still more preferably 45°C/min or lower. Although depending on the P content, by limiting the average cooling rate to 70°C/min or lower, the presence of P-containing compounds can be observed with a metallographic microscope with 500X magnification. On the other hand, if the cooling rate is excessively low, P-containing compounds are likely to grow bigger, and the effect on machinability may decrease. Therefore, the average cooling rate is preferably 0.1°C/min or higher and more preferably 0.3°C/min or higher.

On the other hand, upon further decrease of the material's temperature, it is preferable to limit the cooling rate in the temperature range from 400°C to 200°C. In particular, when the Si content is 1 mass% or more, although depending on the Cu concentration or the like, if the average cooling rate in the above-described temperature range is low, $\gamma$ phase may precipitate. Therefore, the average cooling rate is preferably 5°C/min or higher and more preferably 10°C/min or higher. The average cooling rate in the temperature range does not appear to affect the amount of $\alpha$ phase or $\beta$ phase, but it actually inhibits the growth of P-containing compounds or $\alpha$ crystal grains. The higher the cooling rate, the better the chip breakability, the toughness, and the strength. Specifically, the average cooling rate in the temperature range from 400°C to 200°C is more preferably 75°C/min or higher. It is not particularly necessary to set an upper limit, but as the effect brought by cooling rate peaks out when the cooling rate is 500°C/min, the upper limit of the cooling rate is defined to be 500°C/min. Incidentally, the cooling rate for the temperature range from 440°C to 400°C is not particularly important since the temperature range is merely a transitional one to the temperature range from 400°C to 200°C.

From a perspective of practicability of measurement position, hot working temperature is defined as a temperature of a hot worked material at which measurement can be performed about 3 or 4 seconds after hot extrusion, hot forging, or hot rolling is completed. Metallographic structure is affected by the temperature immediately after working where large plastic deformation occurs. The average cooling rate after hot working in question is about 70°C/min. Therefore, the temperature decrease during the 3 to 4 seconds after hot working is calculated to be about 4°C, which little affects the metallographic structure.

(2) Hot Forging

As a material for hot forging, a hot extruded material is mainly used, but a continuously cast bar is also used. Compared with hot extrusion, in hot forging, hot deformation speed is higher, and a more complex shape is formed. In some cases, high deformation is performed up to a thickness of as thin as about 3 mm, and thus the forging temperature is high. In a preferred embodiment, the temperature of a hot forged material on which plastic working is performed to form a main portion of a forged product, that is, the material's temperature about 3 or 4 seconds immediately after forging (at the point forging is completed) is preferably higher than 530°C and lower than 675°C. In a brass alloy including 2 mass% Pb that is widely used as a brass alloy for forging (59Cu-2Pb-balance Zn), the lower limit of the hot forging temperature is 650°C. Hot forging temperature of embodiments of the present invention is more preferably lower than 650°C. In hot forging also, there is a relation between the composition relational expression f1 and hot forging temperature, and when the composition relational expression f1 is 58.0 or lower, the hot forging temperature is preferably lower than 650°C. Although depending on the working ratio in hot forging, the lower the temperature, the more granular the shape of $\alpha$ phase crystal grains and the smaller the size of $\alpha$ phase crystal grains. As a result, the strength increases, the balance between strength and ductility improves more, and the machinability improves more.

By adjusting the cooling rate after hot forging, the alloy becomes a material having better machinability. That is, cooling is performed after hot forging with the average cooling rate in the temperature range from 530°C to 440°C set at 70°C/min or lower, more preferably 55°C/min or lower, still more preferably 45 °C/min or lower. Although depending on the concentration of P, by controlling the cooling rate such that P-containing compounds having a particle size of about 0.1 to 3 $\mu$m precipitate in $\beta$ phase, the machinability of the alloy can be improved. Incidentally, the lower limit of the above-mentioned average cooling rate is preferably 0.1 °C/min or higher and more preferably 0.3 °C/min or higher in order to inhibit enlargement of compounds in the cooling process.

As the material's temperature further drops, it is preferable to limit the cooling rate in the temperature range from 400°C to 200°C. In particular, when the Si content is 1 mass% or more, although depending on the Cu concentration or the like, if the average cooling rate in the above-described temperature range is low, $\gamma$ phase may precipitate. Therefore, the average cooling rate is preferably 5°C/min or higher and more preferably 10°C/min or higher. Although the average cooling rate in the temperature range does not affect the amount of $\alpha$ phase or $\beta$ phase, the average cooling rate in the temperature range from 400°C to 200°C is more preferably 75 °C/min or higher since the higher the cooling rate, the better the chip breakability, the strength, and the toughness. It is not particularly necessary to set an upper limit, but as the effect brought by cooling rate peaks out when the cooling rate is 500°C/min, the upper limit of the cooling rate is defined to be 500 °C/min. Incidentally, the cooling rate for the temperature range from 440°C to 400°C is not particularly important since this temperature range is merely a transitional one to the temperature range from 400°C to 200°C.

(3) Hot Rolling

In hot rolling, an ingot is heated and rolled 5 to 15 times repeatedly. The material's temperature upon completion of the final hot rolling (the material's temperature 3 to 4 seconds after completion of the process) is preferably higher than 530°C and lower than 650°C, more preferably lower than 625°C. After completion of hot rolling, the rolled material is cooled. In this cooling, like in hot extrusion, the average cooling rate in the temperature range from 530°C to 440°C is preferably 0.1°C/min or higher and 70°C/min or lower, more preferably 0.3°C/min or higher and 55°C/min or lower, or 45°C/min or lower.

In addition, it is preferable to limit the cooling rate in the temperature range from 400°C to 200°C. In particular, when the Si content is 1 mass% or more, although depending on the Cu concentration or the like, if the average cooling rate in the above-described temperature range is low, $\gamma$ phase may precipitate. Therefore, the average cooling rate is preferably 5°C/min or higher and more preferably 10°C/min or higher. Although the average cooling rate in the temperature range does not affect the amount of $\alpha$ phase or $\beta$ phase, the average cooling rate in the temperature range from 400°C to 200°C is more preferably 75°C/min or higher since the higher the cooling rate, the better the chip breakability, the strength, and the toughness. It is not particularly necessary to set an upper limit, but as the effect brought by cooling rate peaks out when the cooling rate is 500°C/min, the upper limit of the cooling rate is defined to be 500°C/min.

(Heat Treatment)

A main heat treatment of copper alloy is also called annealing. Heat treatment is performed as necessary. For example, when making a product so small that it cannot be processed by hot extrusion, heat treatment is performed after cold-drawing or cold wire-drawing for the purpose of recrystallization, that is, to soften the material. Cold-rolling and heat treatment are performed on rolled materials, too. In embodiments of the present invention, heat treatment is also performed in order to control the amounts of $\alpha$ phase and $\beta$ phase.

When heat treatment that induces recrystallization is required, the material is heated to a temperature of 350°C or higher and 540°C or lower for 0.1 to 8 hours. When P-containing compounds are not formed in the previous step, they are formed during heat treatment.

(Cold Working Step)

In the case of a hot extruded bar, cold working may be performed on a hot extruded material in order to obtain a high strength, improve the dimensional accuracy, or straighten (reduce the degree of bending of) an extruded bar or a coiled material. For example, cold-drawing, cold wire drawing, and/or straightness correction are performed on a hot extruded material at a working ratio of about 0% to about 30%. In some cases, low-temperature annealing may further be performed at a temperature of 200°C to 400°C for the purposes of stress removal, straightness correction, and the like.

If the material is a slender bar, a wire, or a rolled material, cold working and heat treatment are repeatedly performed. After the heat treatment, cold working, straightness correction, and/or low-temperature annealing are performed such that the final working ratio becomes 0% to about 30%.

An advantage of cold working is that it can improve the strength of the alloy. By performing a combination of cold working and heat treatment on a hot worked material, no matter which step is performed first, strength and ductility can be well-balanced, and properties required by each application in which strength or ductility is considered important can be obtained. Cold working hardly affects machinability.

In a free-cutting alloy according to the first or second embodiment of the present invention having the above-described constitution, since the alloy's composition, the composition relational expressions f1 to f3, the metallographic structure relational expression f4, and the composition and metallographic structure relational expression f5 are defined as described above, even though the contents of Pb and Bi are small, excellent machinability can be obtained, and excellent hot workability, high strength, and a good balance between strength and ductility can be obtained.

Hereinabove, embodiments of the present invention have been described. However, the present invention is not limited to the embodiments, and appropriate modifications can be made within a range not deviating from the technical requirements of the present invention.

EXAMPLES

Hereinafter, the results of the experiments that were performed to verify the effects of the embodiments of the present invention will be described. The following Examples are for the purpose of explaining the effects of the embodiments. The constituent requirements, the processes, and the conditions described in the Examples do not limit the technical ranges of the embodiments.

Using a low-frequency melting furnace and a semi-continuous casting machine used for manufacturing commercial products, a trial production of the copper alloys was performed.

Their trial production was also performed using a laboratory facility.

Tables 3 to 6 show the alloys' compositions and Tables 7 to 12 show the production steps. Regarding composition, "MM" refers to mischmetal which represents the total content of rare earth elements. Cd was not detected in any of the alloys used in the Examples. Each of the production steps are explained below.

(Steps Nos. A1 to A4, and A10)

As shown in Table 7, using the low-frequency melting furnace and the semi-continuous casting machine used for manufacturing commercial products, a billet having a diameter of 240 mm was produced. For raw materials, those correspond to ones used for commercial production were used. The billet was cut into a length of 800 mm and was heated. Using a hot extruder having a nominal capacity of 3000 tons, two round bars having a diameter of 25.6 mm were extruded. The extruded bars were cooled at several different average cooling rates in the temperature ranges from 530°C to 440°C and from 400°C to 200°C. Temperature was measured using a radiation thermometer mainly in a period from the middle stage to the final stage of the hot extrusion process about three or four seconds after the bars came out of the extruder. For the temperature measurement during hot extrusion, hot forging, and hot rolling described below, IGA 8Pro/MB20, a radiation thermometer manufactured by Luma Sense Technologies Inc., was used.

It was verified that the average temperature of the extruded material was within $\pm 5$°C of the respective corresponding temperatures shown in Table 7 (i.e., within a range from (temperature shown in the table) - 5°C to (temperature shown in the table) + 5°C).

In Steps Nos. A1 and A2, the extrusion temperature was 580°C. In Step No. A3, the extrusion temperature was 680°C. In Step No. A4, the extrusion temperature was 620°C. The average cooling rate in the temperature range from 530°C to 440°C after hot extrusion was 30°C/min in Steps Nos. A1, A2, and A3, and was 80°C/min in Step No. A4. In the subsequent cooling, the cooling rate in the temperature range from 400°C to 200°C was 25°C/min in Steps Nos. A1 and A3, 120°C/min in Step No. A2, and 30°C/min in Step No. A4.

After completion of hot extrusion, in steps other than Step No. A10, the extruded materials having a diameter of 25.6 mm were cold-drawn to reduce the diameter to 25.0 mm (working ratio: 4.6%).

In Step No. A10, the material was hot-extruded at 550°C to modify the diameter to 45 mm and was cooled at an average cooling rate of 20°C/min in the temperature range from 530°C to 440°C, and 40°C/min in the temperature range from 400°C to 200°C. The extruded material obtained in Step No. A10 was used for a forging test.

(Steps No. C0, C1 to C3, and C10)

As shown in Table 8, in a laboratory, raw materials were melted at a predetermined component ratio. Test materials to which inevitable impurity elements were intentionally added were also prepared. The molten alloy was cast into a mold having a diameter of 100 mm and a length of 180 mm to prepare a billet (Alloys Nos. S11 to S31, S41 to S44, and S51 to S63).

This billet was heated and extruded into round bars having a diameter of 25.6 mm at an extrusion temperature of 590°C in the cases of Steps No. C1, C2, and C3. The average cooling rate in the temperature range from 530°C to 440°C after extrusion was 25°C/min in Steps Nos. C1 and C3 and was 80°C/min in Step No. C2. In the subsequent cooling, the cooling rate in the temperature range from 400°C to 200°C was 20°C/min in Step No. C1, 40°C/min in Step No. C2, and 3°C/min in Step No. C3.

After completion of hot extrusion, in steps other than Step No. C10, the extruded materials having a diameter of 25.6 mm were cold-drawn to reduce the diameter to 25.0 mm (working ratio: 4.6%).

In addition, Step No. C0 was performed on Alloys Nos. S41 to S44. Specifically, the extrusion temperature was 820°C for Alloy No. S41, 590°C for Alloys other than Alloy No. S41, i.e., Alloys Nos. S42 to S44. The alloys were hot-extruded to a diameter of 25.6 mm, then straightness correction was performed. The average cooling rate after extrusion was the same as that of Step No. C1. Next, a heat treatment was performed on Alloys Nos. S41 to S44 at 500°C for 2 hours.

Further, as a comparative material, a commercially available leaded brass bar (Alloy No. S45) was prepared.

In Step No. C10, the alloy was extruded to a diameter of 45 mm at an extrusion temperature of 590°C. The average cooling rate in the temperature range from 530°C to 440°C was 20°C/min, and the average cooling rate in the temperature range from 400°C to 200°C was 20°C/min. The extruded material obtained in Step No. C10 was used as a material for forging.

(Steps D1 and D2)

As shown in Table 9, in Steps Nos. D1 and D2, a molten alloy was obtained from a laboratory and was cast into a metal mold having an inner diameter of 30 mm and 45 mm respectively. The molten alloy was cooled at an average cooling rate of 40°C/min in the temperature range from 530°C to 440°C and 30°C/min in the temperature range from 400°C to 200°C in the process of cooling. The castings obtained in Step No. D1 was used as materials for the machining test and the mechanical tests. The casting obtained in Step No. D2 was used as a material for the forging in Step No. F3.

(Step No. E1)

As shown in Table 10, Step No. E1 is a step including annealing.
In Step No. E1, the alloy was extruded into a round bar having a diameter of 29.0 mm at an extrusion temperature of 590°C. The average cooling rate in the temperature range from 530°C to 440°C was 30°C/min, and that in the temperature range from 400°C to 200°C was 25°C/min. The alloy was cold-drawn to a diameter of 26.0 mm, then a heat treatment was performed at 420°C for 60 minutes. Next, the alloy was cold-drawn to a diameter of 24.5 mm. This step is a step mainly for obtaining slender bars having a diameter of, for instance, 7 mm or less. However, as the machining test or impact test was unable to be performed on slender bars, an extruded bar having a large diameter was used for the testing instead.

(Steps No. F1 to F6)

As shown in Table 11, a round bar having a diameter of 45 mm and castings obtained in Steps Nos. A10, C10, and D2 were cut to a length of 180 mm. This round bar was horizontally placed and forged to a thickness of 16 mm using a press machine having a hot forging press capacity of 150 tons. About 3 to 4 seconds immediately after the material was hot-forged to a predetermined thickness (upon completion of the hot forging), the temperature was measured using a radiation thermometer and a contact thermometer. It was verified that the hot forging temperature (hot working temperature) was within ±5°C of the respective corresponding temperatures shown in Table 11 (*i.e.*, within a range from (temperature shown in the table)-5°C to (temperature shown in the table)+5°C).
Hot forging was performed at 690°C in Step No. F5 and at 620°C in Steps other than Step No. F5, *i.e.,* Steps Nos. F1 to F4, and F6. Cooling was performed in the temperature range from 530°C to 440°C at a cooling rate of 40°C/min in Steps Nos. F2 and F5, and 28°C/min in the steps other than Steps Nos. F2 and F2, *i.e.,* Steps Nos. F1, F3, F4, and F6. The cooling for the temperature range from 400°C to 200°C was performed at an average cooling rate of 20°C/min in Steps Nos. F1, F2, F3, and F5, 150°C/min in Step No. F4, and 3°C/min in Step No. F6.
The hot forged materials were cut and provided for machining tests and experiments to examine mechanical characteristics.
The above-described test materials were evaluated for the following items. The evaluation results are shown in Tables 12 to 25.

(Observation of Metallographic Structure)

The metallographic structure was observed using the following method, then the area ratios (%) of the respective phases such as $\alpha$ phase, $\beta$ phase, $\gamma$ phase, $\kappa$ phase, and $\mu$ phase were measured by image analysis. It was assumed that $\alpha$' phase, $\beta$' phase, and $\gamma$' phase were included in $\alpha$ phase, $\beta$ phase, and $\gamma$ phase respectively.
Each of the test materials (bars and forged products) was cut parallel to its long side or the flowing direction of the metallographic structure. Next, the surface was polished (mirror-polished) and was etched with a mixed solution of hydrogen peroxide and ammonia water. For etching, an aqueous solution obtained by mixing 3 ml of 3 vol% hydrogen peroxide water and 22 ml of 14 vol% ammonia water was used. At a room temperature of about 15°C to about 25°C, the polished metal surface was dipped in the aqueous solution for about 2 seconds to about 5 seconds.
The metallographic structure was observed with a metallographic microscope at a magnification of 500X to obtain the proportions of the respective phases and investigate whether or not any P-containing compounds were present. In micrographs of five visual fields, respective phases ($\alpha$ phase, $\beta$ phase, $\gamma$ phase, $\kappa$ phase, and $\mu$ phase) were manually painted using image processing software "Photoshop CC". Next, the micrographs were binarized using image analysis software "WinROOF 2013" to obtain area ratio of each of the phases. Specifically, proportion of each of the phases was obtained by averaging area ratios of each phase in the five visual fields. In this area ratio calculation, the aggregate of the area ratio of each and every constituent phase excluding oxides, sulfides, Pb particles, precipitates including P-containing compounds, and crystallized particles constitutes 100%.
Then P-containing compounds were observed. The minimum size of a precipitated particle of a P-containing compound that can be observed with a metallographic microscope at a magnification of 500X is about 0.3 $\mu$m. Although

depending on the P content and the production conditions, several to several hundreds of P-containing compounds are present in one visual field of the microscope. Most of the P-containing compounds are present in β phase or at a phase boundary between α phase and β phase. Further, γ phase having a size of less than 2 μm is sometimes present in β phase. Phases having a size of less than 2 μm are unable to be identified with a metallographic microscope with 500X magnification. Therefore, in embodiments of the present invention, tiny γ phase of less than 2 μm was treated as β phase. When observed with a metallographic microscope, a P-containing compound appears blackish grey. Therefore, it is distinguishable from a precipitate or compound formed of Mn or Fe which has a light blue color.

Incidentally, when a test material containing P is etched with an etching solution according to an embodiment of the present invention, phase boundaries between α phase and β phase can be viewed clearly as shown in Fig. 3. When the P content exceeds about 0.01 mass%, the boundaries can be seen more clearly, indicating that inclusion of P causes metallographic structure to change.

When it was difficult to identify phases, precipitates, and P-containing compounds, they were identified by an electron backscattering diffraction pattern (FE-SEM-EBSP) method in which an EDS equipped in a field emission scanning electron microscope (FE-SEM) (JSM-7000F, manufactured by JEOL Ltd.) was used, at a magnification of 500X or 2000X under the conditions of an acceleration voltage of 15 kV and a current value of 15 (set value). When no P-containing compound was observed in a test material containing P at the stage of observation using a metallographic microscope, presence of P-containing compounds was checked at a magnification of 2000X.

When P-containing compounds were found when observed with a metallographic microscope, the alloy was evaluated as "A" (good) in terms of presence of P-containing compounds. When P-containing compounds were not found with a metallographic microscope with 500X magnification but were found when observed at a magnification of 2000X, the alloy was evaluated as "B" (fair) in terms of presence of P-containing compounds. When no P-containing compound was found, the alloy was evaluated as "X" (poor) in terms of presence of P-containing compounds. Those evaluated as "B" regarding presence of P-containing compounds are also acceptable in embodiments of the present invention. In the tables, the evaluation results regarding presence of P-containing compounds are shown in the "Presence of P Compound" row.

(Electrical Conductivity)

For the measurement of electrical conductivity, an electrical conductivity measurement device (SIGMATEST D2.068, manufactured by Foerster Japan Ltd.) was used. In this specification, the terms "electric conductivity" and "electrical conductivity" are meant to have the same meaning. In addition, thermal conductivity and electrical conductivity are closely corelated. Therefore, the higher the electrical conductivity, the better the thermal conductivity.

(Machinability Test using Lathe)

Machinability was evaluated by the machining test using a lathe as described below. Even though machining conditions applied in actual lathing are varied, for the Examples, the testing was performed on two sets of conditions. One lathing test was performed at a relatively low speed, a low feed, and a low cutting depth. Specifically, at a cutting speed of 40 m/min, a cutting depth of 1. 0 mm, and a feed of 0.11 mm/rev. The other was performed under harsher cutting conditions, i.e., at a relatively high speed, a high feed, and a high cutting depth. Specifically, at a cutting speed of 172 m/min, a cutting depth of 2.0 mm, and a feed of 0.21 mm/rev. Lathing performance was then evaluated based on chip breakability.

More specifically, in the former test, a hot extruded bar, a hot forged product, or a casting was machined to prepare a test material having a diameter of 14 mm. A carbide tool (chip) K10 not equipped with a chip breaker was attached to the lathe. Using this lathe, the circumference of the test material having a diameter of 14 mm was machined on a dry condition at a rake angle of 0°, a nose radius of 0.4 mm, a clearance angle of 6°, a cutting speed of 40 m/min, a cutting depth of 1.0 mm, and a feed of 0.11 mm/rev.

In the latter test, a hot extruded bar, a hot forged product, or a casting was machined to prepare a test material having a diameter of 22 mm. A carbide tool (chip) K10 equipped with a chip breaker was attached to the lathe. Using this lathe, the circumference of the test material having a diameter of 22 mm was machined on a dry condition at a rake angle of 0°, a nose radius of 0.4 mm, a clearance angle of 6°, a cutting speed of 172 m/min, a cutting depth of 2.0 mm, and a feed of 0.21 mm/rev.

After the lathing, a chip was collected and embedded in resin perpendicular to the transverse direction of the chip (such that the chip stands on its end in the transverse direction) assuming that the direction in which the chip was produced (discharged) is the longitudinal direction, then the chip embedded in the resin was polished and mirror-finished. Subsequently, a cross section of the chip was observed with a microscope. In order to evaluate chip breakability, when the average height from the bottom surface to the convex portion was represented by H1 and the average height of the concave portion was represented by H2, chip breakability was evaluated based on f6 = H2/H1. In addition, the average of H2 and H1 (f6A = (HI + H2)/2), that is, the average chip thickness was also measured. Incidentally, the unit of H1 and H2 is mm.

Figs. 1 and 2 show examples of chips' cross sections. In these figures, the average height of the convex portion (H1) and the average height of the concave portion (H2) are visually determined and indicated with lines. For observation, five visual fields were selected, and f6 and f6A were calculated based on their average values.

Materials having excellent machinability are usually continuously processed with limited manpower, i.e., one operator taking care of about ten cutting machines. Therefore, serious problems during cutting are entanglement of chips around the tool and bulking of chips. It should be noted here that, for easy breakup of chips, H2/H1 = f6 needs to be 0.80 or lower. If at least a tool equipped with a chip breaker is used, chips will be easily broken. f6 is preferably 0.65 or lower and more preferably 0.60 or lower. On the other hand, when f6 is lower than 0.25, excessive breakup of chips occurs causing generation of acicular chips, which is problematic since such chips may enter any gaps of the cutting machine or hurt a person who disposes of the chips. Accordingly, f6 is 0.25 or higher and preferably 0.35 or higher. Most preferably, f6 is 0.40 to 0.55. If f6 is within this range, chips easily break up without attaching a chip breaker. Note that the shape of a chip's cross section depends not only on cutting tool but also on cutting conditions. In Examples of the instant invention, chip breakability was evaluated under two sets of conditions - one was at a low speed and a low feed, and the other was at a high speed and a high feed. The value of f6 of $\beta$ phase containing Si and P when machined at a low speed and a low feed was substantially the same as that of a free-cutting copper alloy containing 3 mass% Pb indicating that it has excellent chip breakability. However, when machined at a high speed and a high feed, the value of f6 of $\beta$ phase containing Si and P increased resulting in deterioration of chip breakability. In the case of alloys according to an embodiment of the present invention, the problem of $\beta$ phase was solved, and by containing an appropriate amount of $\alpha$ phase and the effect of Pb particles, excellent chip breakability was achieved even when machined at a high speed and a high feed. In particular, when the cutting speed was 172 m/min, as many as about 20,000 protrusions having a near trapezoidal shape are generated per second forming a regular zigzag shape (dents and spikes).

In addition, average chip thickness is closely related to cutting resistance and is linked with feed. Although depending on cutting conditions including the cutting tool to use, in the case of an alloy having excellent machinability and chip breakability, like an alloy according to an embodiment of the instant invention, the average chip thickness is about 0.9 to about 1.8 times, preferably about 1.0 to about 1.7 times the value of the feed "f". Incidentally, in the case of brass containing 3% Pb, the average chip thickness is about 1.1 times the value of "f". In the case of an alloy according to an embodiment of the instant invention, the average chip thickness is in a range of about 1.1 to 1.6 times the value of "f". The chip thickness was thin, and thus there was no problem about the thickness.

(Mechanical Properties)

(Hardness)

The hardness of each of the test materials was measured using a Vickers hardness tester with a load of 49 kN applied. To be a material having a high strength, it should have a Vickers hardness of preferably 110 Hv or higher and more preferably 120 Hv or higher. It can be said that such a material has a very high level of hardness among free-cutting hot extruded bars, free-cutting hot forged products, and free-cutting copper alloy castings on which no plastic working is performed.

(Impact Resistance)

In the impact test, specimens with a U-shaped notch (notch depth: 2mm, notch bottom radius: 1 mm) were prepared according to JIS Z 2242. Using a striker having a radius of 2 mm, a Charpy impact test was performed to measure the specimens' impact value. As long as the resultant value of the Charpy impact test performed using specimens with a U-shaped notch at room temperature (for example, 10°C to 30°C), (I-1), is 15 J/cm$^2$ or higher, there is no significant problem in actual use. The impact test value at normal temperature, (I-1), is preferably 20 J/cm$^2$ or higher. When cold working is performed after hot working, impact value decreases. In the case of a hot-extruded material, a hot-forged material without cold working, or a casting, the impact test value at normal temperature, (I-1), is preferably 25 J/cm$^2$ or higher.

An impact test at 200°C was performed as follows. The above-described test specimen was put into a furnace, then after its temperature reached 197°C (200°C - 3°C), it was held at 197°C for 20 minutes. Subsequently, the specimen was taken out of the furnace, set in a tester, and struck with a striker having a radius of 2 mm 5 to 20 seconds after taking the test specimen out of the furnace. The actual temperature of the specimen when struck was about 190°C.

The impact test value at 200°C, (I-2), is 12 J/cm$^2$ or higher and preferably 15 J/cm$^2$ or higher. When the impact test value at 200°C, (1-2), is the preferable numerical value or higher, there is no problem in machining or in actual use. To represent the degree (sensitivity) of decrease in impact value at 200°C compared with that at normal temperature, f8 = (I-2)/(I-1) was adopted. In order to keep the sensitivity of decrease in toughness at 200°C low, f8 is preferably 0.5 or higher, more preferably 0.65 or higher, and still more preferably 0.8 or higher. It should be noted that the absolute value of the impact value at 200°C, (1-2), takes precedence.

(Balance between Hardness and Toughness)

In embodiments of the present invention, it is desired to obtain high strength and a good balance between strength, toughness, and ductility. As a yardstick of strength, Vickers hardness (HV) is adopted, and as a yardstick of toughness, resultant value of a Charpy impact test using specimen with a U-shaped notch is adopted. In addition, as preconditions, the embodiments' Charpy impact test value when the test is performed at normal temperature using specimens with a U-shaped notch, (I-1), is 15 J/cm$^2$ or higher, and their Vickers hardness (HV) is 110 or higher. As an index of balance between toughness and strength, a characteristic relational expression f7, which is a value obtained by multiplying the Vickers hardness (HV) by (I-1) raised to the power of 1/2, is defined. f7 = (I-1)$^{1/2}$ × (HV) is defined to be at least 550 or higher, preferably 600 or higher, and more preferably 650 or higher.

Table 3

| Alloy No. | Component Composition (mass%) | | | | | | Inevitable Impurities (mass%) | | | | | | | | | | | | Composition Relational Expression | | |
|---|---|---|---|---|---|---|---|---|---|---|---|---|---|---|---|---|---|---|---|---|---|
| | Cu | Si | P | Pb | Bi | Zn | Fe | Mn | Cr | Co | Sn | A1 | Ni | Ag | As | Sb | B | MM | f1 | f2 | f3 |
| S01 | 63.2 | 1.05 | 0.049 | 0.063 | 0.016 | Balance | 0.09 | 0.01 | 0.02 | 0.01 | 0.06 | 0.01 | 0.05 | 0.01 | 0.00 | 0.01 | 0.00 | 0.00 | 58.3 | 0.079 | 0.20 |
| S02 | 62.1 | 0.91 | 0.071 | 0.068 | 0.030 | Balance | 0.05 | 0.01 | 0.00 | 0.00 | 0.11 | 0.00 | 0.02 | 0.02 | 0.00 | 0.00 | 0.00 | 0.00 | 57.8 | 0.098 | 0.31 |
| S11 | 63.5 | 1.11 | 0.074 | 0.084 | 0.018 | Balance | 0.05 | 0.00 | 0.00 | 0.00 | 0.05 | 0.00 | 0.07 | 0.00 | 0.00 | 0.00 | 0.00 | 0.00 | 58.3 | 0.102 | 0.18 |
| S12 | 63.6 | 1.00 | 0.042 | 0.058 | 0.025 | Balance | 0.03 | 0.08 | 0.00 | 0.01 | 0.05 | 0.01 | 0.03 | 0.01 | 0.01 | 0.00 | 0.00 | 0.00 | 58.9 | 0.083 | 0.30 |
| S12.1 | 63.5 | 1.00 | 0.040 | 0.060 | 0.025 | Balance | 0.19 | 0.08 | 0.00 | 0.01 | 0.05 | 0.01 | 0.03 | 0.01 | 0.01 | 0.00 | 0.00 | 0.00 | 58.8 | 0.085 | 0.29 |
| S12.2 | 63.6 | 1.01 | 0.043 | 0.059 | 0.024 | Balance | 0.27 | 0.08 | 0.00 | 0.01 | 0.05 | 0.01 | 0.03 | 0.01 | 0.01 | 0.00 | 0.00 | 0.00 | 58.9 | 0.083 | 0.29 |
| S12.3 | 63.6 | 1.00 | 0.042 | 0.058 | 0.025 | Balance | 0.30 | 0.19 | 0.00 | 0.01 | 0.05 | 0.01 | 0.03 | 0.01 | 0.01 | 0.00 | 0.00 | 0.00 | 58.9 | 0.083 | 0.30 |
| S12.4 | 63.5 | 1.01 | 0.043 | 0.057 | 0.024 | Balance | 0.03 | 0.08 | 0.00 | 0.01 | 0.20 | 0.07 | 0.03 | 0.01 | 0.01 | 0.00 | 0.00 | 0.00 | 58.8 | 0.081 | 0.30 |
| S12.5 | 63.5 | 1.00 | 0.041 | 0.059 | 0.025 | Balance | 0.03 | 0.08 | 0.00 | 0.01 | 0.34 | 0.13 | 0.03 | 0.01 | 0.01 | 0.00 | 0.00 | 0.00 | 58.8 | 0.084 | 0.30 |
| S13 | 64.2 | 1.03 | 0.093 | 0.142 | 0.030 | Balance | 0.00 | 0.00 | 0.00 | 0.00 | 0.00 | 0.00 | 0.00 | 0.00 | 0.00 | 0.00 | 0.00 | 0.00 | 59.4 | 0.172 | 0.17 |
| S14 | 61.7 | 0.82 | 0.067 | 0.002 | 0.002 | Balance | 0.00 | 0.00 | 0.00 | 0.00 | 0.00 | 0.00 | 0.00 | 0.00 | 0.00 | 0.00 | 0.00 | 0.00 | 57.8 | 0.004 | 0.50 |
| S15 | 63.9 | 1.24 | 0.123 | 0.147 | 0.042 | Balance | 0.05 | 0.00 | 0.00 | 0.00 | 0.05 | 0.00 | 0.01 | 0.00 | 0.00 | 0.00 | 0.00 | 0.00 | 58.1 | 0.189 | 0.22 |
| S15.1 | 63.9 | 1.24 | 0.123 | 0.147 | 0.042 | Balance | 0.05 | 0.00 | 0.00 | 0.00 | 0.05 | 0.00 | 0.01 | 0.00 | 0.00 | 0.00 | 0.00 | 0.00 | 58.1 | 0.189 | 0.22 |
| S16 | 62.4 | 0.97 | 0.027 | 0.117 | 0.015 | Balance | 0.00 | 0.00 | 0.00 | 0.00 | 0.00 | 0.00 | 0.00 | 0.00 | 0.00 | 0.00 | 0.00 | 0.00 | 57.9 | 0.132 | 0.11 |
| S16.1 | 62.4 | 0.97 | 0.027 | 0.117 | 0.015 | Balance | 0.00 | 0.00 | 0.00 | 0.00 | 0.00 | 0.00 | 0.00 | 0.00 | 0.00 | 0.00 | 0.00 | 0.00 | 57.9 | 0.132 | 0.11 |
| S17 | 63.7 | 0.98 | 0.091 | 0.078 | 0.036 | Balance | 0.00 | 0.00 | 0.00 | 0.00 | 0.00 | 0.00 | 0.00 | 0.00 | 0.00 | 0.00 | 0.00 | 0.00 | 59.1 | 0.114 | 0.32 |
| S18 | 62.8 | 1.20 | 0.036 | 0.077 | 0.038 | Balance | 0.07 | 0.05 | 0.00 | 0.00 | 0.00 | 0.00 | 0.00 | 0.00 | 0.00 | 0.00 | 0.00 | 0.00 | 57.2 | 0.115 | 0.33 |
| S18.1 | 62.8 | 1.19 | 0.035 | 0.076 | 0.037 | Balance | 0.07 | 0.05 | 0.00 | 0.00 | 0.17 | 0.09 | 0.04 | 0.02 | 0.00 | 0.00 | 0.00 | 0.00 | 57.2 | 0.113 | 0.33 |
| S18.2 | 62.7 | 1.18 | 0.037 | 0.077 | 0.038 | Balance | 0.07 | 0.05 | 0.00 | 0.00 | 0.38 | 0.09 | 0.04 | 0.02 | 0.00 | 0.00 | 0.00 | 0.00 | 57.2 | 0.115 | 0.33 |
| S19 | 64.5 | 1.26 | 0.065 | 0.061 | 0.038 | Balance | 0.00 | 0.00 | 0.00 | 0.00 | 0.00 | 0.00 | 0.00 | 0.00 | 0.00 | 0.00 | 0.00 | 0.00 | 58.6 | 0.099 | 0.38 |

Note: "MM" refers to mischmetal.

Table 4

| Alloy No. | Component Composition (mass%) | | | | | | Inevitable Impurities (mass%) | | | | | | | | | | | | Composition Relational Expression | | |
|---|---|---|---|---|---|---|---|---|---|---|---|---|---|---|---|---|---|---|---|---|---|
| | Cu | Si | P | Pb | Bi | Zn | Fe | Mn | Cr | Co | Sn | Al | Ni | Ag | As | Sb | B | MM | f1 | f2 | f3 |
| S20 | 59.9 | 0.64 | 0.086 | 0.085 | 0.033 | Balance | 0.02 | 0.06 | 0.01 | 0.01 | 0.00 | 0.03 | 0.00 | 0.00 | 0.00 | 0.00 | 0.00 | 0.01 | 56.9 | 0.118 | 0.28 |
| S20.1 | 59.9 | 0.64 | 0.086 | 0.085 | 0.033 | Balance | 0.02 | 0.06 | 0.01 | 0.01 | 0.00 | 0.03 | 0.00 | 0.00 | 0.00 | 0.00 | 0.00 | 0.01 | 56.9 | 0.118 | 0.28 |
| S21 | 62.6 | 1.03 | 0.039 | 0.028 | 0.009 | Balance | 0.07 | 0.00 | 0.00 | 0.01 | 0.11 | 0.00 | 0.00 | 0.00 | 0.00 | 0.00 | 0.00 | 0.00 | 57.8 | 0.037 | 0.24 |
| S21.1 | 62.6 | 1.03 | 0.039 | 0.028 | 0.009 | Balance | 0.07 | 0.00 | 0.00 | 0.01 | 0.11 | 0.00 | 0.00 | 0.00 | 0.00 | 0.00 | 0.00 | 0.00 | 57.8 | 0.037 | 0.24 |
| S22 | 62.7 | 0.98 | 0.063 | 0.019 | 0.005 | Balance | 0.00 | 0.00 | 0.00 | 0.00 | 0.00 | 0.00 | 0.00 | 0.00 | 0.00 | 0.00 | 0.00 | 0.00 | 58.1 | 0.024 | 0.21 |
| S23 | 61.4 | 0.78 | 0.009 | 0.105 | 0.025 | Balance | 0.00 | 0.00 | 0.00 | 0.00 | 0.00 | 0.00 | 0.00 | 0.00 | 0.00 | 0.00 | 0.00 | 0.00 | 57.8 | 0.130 | 0.19 |
| S24 | 61.7 | 0.71 | 0.035 | 0.076 | 0.029 | Balance | 0.03 | 0.04 | 0.00 | 0.00 | 0.05 | 0.00 | 0.00 | 0.01 | 0.00 | 0.00 | 0.00 | 0.01 | 58.4 | 0.105 | 0.28 |
| S24.1 | 61.8 | 0.72 | 0.034 | 0.078 | 0.029 | Balance | 0.16 | 0.13 | 0.00 | 0.00 | 0.05 | 0.00 | 0.00 | 0.01 | 0.00 | 0.00 | 0.00 | 0.01 | 58.5 | 0.107 | 0.27 |
| S24.2 | 61.8 | 0.72 | 0.035 | 0.077 | 0.027 | Balance | 0.26 | 0.24 | 0.00 | 0.00 | 0.05 | 0.00 | 0.00 | 0.01 | 0.00 | 0.00 | 0.00 | 0.01 | 58.5 | 0.104 | 0.26 |
| S25 | 63.2 | 1.13 | 0.057 | 0.101 | 0.022 | Balance | 0.06 | 0.00 | 0.00 | 0.00 | 0.04 | 0.00 | 0.00 | 0.00 | 0.00 | 0.00 | 0.00 | 0.00 | 57.9 | 0.123 | 0.18 |
| S25.1 | 63.2 | 1.13 | 0.057 | 0.101 | 0.022 | Balance | 0.06 | 0.00 | 0.00 | 0.00 | 0.04 | 0.00 | 0.00 | 0.00 | 0.00 | 0.00 | 0.00 | 0.00 | 57.9 | 0.123 | 0.18 |
| S25.2 | 63.2 | 1.13 | 0.057 | 0.101 | 0.022 | Balance | 0.06 | 0.00 | 0.00 | 0.00 | 0.04 | 0.00 | 0.00 | 0.00 | 0.00 | 0.00 | 0.00 | 0.00 | 57.9 | 0.123 | 0.18 |
| S26 | 62.7 | 1.16 | 0.020 | 0.105 | 0.048 | Balance | 0.00 | 0.00 | 0.00 | 0.00 | 0.00 | 0.00 | 0.00 | 0.00 | 0.00 | 0.00 | 0.00 | 0.00 | 57.3 | 0.153 | 0.31 |
| S26.1 | 62.7 | 1.16 | 0.020 | 0.105 | 0.048 | Balance | 0.00 | 0.00 | 0.00 | 0.00 | 0.00 | 0.00 | 0.00 | 0.00 | 0.00 | 0.00 | 0.00 | 0.00 | 57.3 | 0.153 | 0.31 |
| S27 | 62.1 | 0.91 | 0.071 | 0.004 | 0.048 | Balance | 0.05 | 0.01 | 0.00 | 0.00 | 0.11 | 0.00 | 0.02 | 0.02 | 0.00 | 0.00 | 0.00 | 0.00 | 57.8 | 0.052 | 0.92 |
| S28 | 62.7 | 0.86 | 0.047 | 0.082 | 0.019 | Balance | 0.09 | 0.01 | 0.02 | 0.00 | 0.06 | 0.00 | 0.05 | 0.01 | 0.01 | 0.00 | 0.006 | 0.00 | 58.7 | 0.101 | 0.19 |
| S28.1 | 62.7 | 0.86 | 0.047 | 0.082 | 0.019 | Balance | 0.09 | 0.01 | 0.02 | 0.00 | 0.06 | 0.00 | 0.05 | 0.01 | 0.01 | 0.00 | 0.006 | 0.00 | 58.7 | 0.101 | 0.19 |
| S29 | 61.1 | 0.76 | 0.015 | 0.080 | 0.045 | Balance | 0.05 | 0.01 | 0.00 | 0.00 | 0.06 | 0.02 | 0.00 | 0.00 | 0.00 | 0.00 | 0.00 | 0.00 | 57.6 | 0.125 | 0.36 |
| S30 | 63.0 | 1.02 | 0.053 | 0.006 | 0.070 | Balance | 0.00 | 0.00 | 0.00 | 0.00 | 0.00 | 0.00 | 0.00 | 0.00 | 0.00 | 0.00 | 0.00 | 0.00 | 58.2 | 0.076 | 0.92 |
| S31 | 62.2 | 0.93 | 0.004 | 0.008 | 0.042 | Balance | 0.00 | 0.00 | 0.00 | 0.00 | 0.00 | 0.00 | 0.00 | 0.00 | 0.00 | 0.00 | 0.00 | 0.00 | 57.9 | 0.050 | 0.84 |

Note: "MM" refers to mischmetal.

Table 5

| Alloy No. | Component Composition (mass%) | | | | | | Inevitable Impurities (mass%) | | | | | | | | | | | | Composition Relational Expression | | |
|---|---|---|---|---|---|---|---|---|---|---|---|---|---|---|---|---|---|---|---|---|---|
| | Cu | Si | P | Pb | Bi | Zn | Fe | Mn | Cr | Co | Sn | Al | Ni | Ag | As | Sb | Bi | MM | f1 | f2 | f3 |
| S41 | 65.0 | 0.00 | 0.000 | 0.000 | 0.000 | Balance | 0.00 | 0.00 | 0.00 | 0.00 | 0.00 | 0.00 | 0.00 | 0.00 | 0.00 | 0.00 | 0.00 | 0.00 | | | |
| S42 | 54.0 | 0.00 | 0.000 | 0.000 | 0.000 | Balance | 0.00 | 0.00 | 0.00 | 0.00 | 0.00 | 0.00 | 0.00 | 0.00 | 0.00 | 0.00 | 0.00 | 0.00 | | | |
| S43 | 58.5 | 1.00 | 0.000 | 0.000 | 0.000 | Balance | 0.00 | 0.00 | 0.00 | 0.00 | 0.00 | 0.00 | 0.00 | 0.00 | 0.00 | 0.00 | 0.00 | 0.00 | | | |
| S44 | 58.5 | 1.00 | 0.060 | 0.000 | 0.000 | Balance | 0.00 | 0.00 | 0.00 | 0.00 | 0.00 | 0.00 | 0.00 | 0.00 | 0.00 | 0.00 | 0.00 | 0.00 | | | |
| | | | | | | | brass | | | | | | | | | | | | | | |
| S45 | 58.8 | 0.00 | 0.001 | 3.100 | 0.010 | Balance | 0.23 | 0.01 | 0.00 | 0.02 | 0.29 | 0.00 | 0.04 | 0.01 | 0.00 | 0.01 | 0.00 | 0.00 | | 3.110 | |
| | | | | | | | Brass containing 3% Pb | | | | | | | | | | | | | | |

Note: "MM" refers to mischmetal.

Table 6

| Alloy No. | Component Composition (mass%) | | | | | | Inevitable Impurities (mass%) | | | | | | | | | | | | Composition Relational Expression | | |
|---|---|---|---|---|---|---|---|---|---|---|---|---|---|---|---|---|---|---|---|---|---|
| | Cu | Si | P | Pb | Bi | Zn | Fe | Mn | Cr | Co | Sn | Al | Ni | Ag | As | Sb | B | MM | f1 | f2 | f3 |
| S51 | 65.1 | 1.36 | 0.077 | 0.040 | 0.035 | Balance | 0.00 | 0.00 | 0.00 | 0.00 | 0.00 | 0.00 | 0.00 | 0.00 | 0.00 | 0.00 | 0.00 | 0.00 | 58.7 | 0.075 | 0.47 |
| S52 | 63.1 | 1.11 | 0.114 | 0.145 | 0.077 | Balance | 0.00 | 0.00 | 0.00 | 0.00 | 0.00 | 0.00 | 0.00 | 0.00 | 0.00 | 0.00 | 0.00 | 0.00 | 57.9 | 0.222 | 0.35 |
| S52.1 | 63.1 | 1.11 | 0.114 | 0.145 | 0.077 | Balance | 0.00 | 0.00 | 0.00 | 0.00 | 0.00 | 0.00 | 0.00 | 0.00 | 0.00 | 0.00 | 0.00 | 0.00 | 57.9 | 0.222 | 0.35 |
| S53 | 59.5 | 0.25 | 0.050 | 0.070 | 0.030 | Balance | 0.03 | 0.02 | 0.00 | 0.00 | 0.03 | 0.00 | 0.05 | 0.02 | 0.00 | 0.02 | 0.00 | 0.00 | 58.4 | 0.100 | 0.30 |
| S54 | 60.0 | 0.85 | 0.076 | 0.075 | 0.028 | Balance | 0.00 | 0.00 | 0.00 | 0.00 | 0.00 | 0.00 | 0.00 | 0.00 | 0.00 | 0.00 | 0.00 | 0.00 | 56.0 | 0.103 | 0.27 |
| S54.1 | 60.0 | 0.85 | 0.076 | 0.075 | 0.028 | Balance | 0.00 | 0.00 | 0.00 | 0.00 | 0.00 | 0.00 | 0.00 | 0.00 | 0.00 | 0.00 | 0.00 | 0.00 | 56.0 | 0.103 | 0.27 |
| S55 | 61.1 | 0.65 | 0.000 | 0.070 | 0.020 | Balance | 0.05 | 0.00 | 0.00 | 0.00 | 0.05 | 0.00 | 0.00 | 0.00 | 0.00 | 0.00 | 0.00 | 0.01 | 58.1 | 0.090 | 0.22 |
| S56 | 60.7 | 0.47 | 0.044 | 0.055 | 0.034 | Balance | 0.03 | 0.00 | 0.00 | 0.00 | 0.05 | 0.00 | 0.04 | 0.01 | 0.00 | 0.00 | 0.00 | 0.00 | 58.5 | 0.089 | 0.38 |
| S57 | 63.6 | 0.74 | 0.100 | 0.112 | 0.031 | Balance | 0.00 | 0.00 | 0.00 | 0.01 | 0.00 | 0.02 | 0.00 | 0.00 | 0.00 | 0.00 | 0.00 | 0.00 | 60.1 | 0.143 | 0.22 |
| S58 | 62.0 | 0.86 | 0.038 | 0.001 | 0.001 | Balance | 0.00 | 0.00 | 0.00 | 0.00 | 0.00 | 0.00 | 0.00 | 0.00 | 0.00 | 0.00 | 0.00 | 0.00 | 57.9 | 0.002 | 0.50 |
| S59 | 61.2 | 0.62 | 0.020 | 0.015 | 0.003 | Balance | 0.00 | 0.00 | 0.00 | 0.00 | 0.00 | 0.00 | 0.00 | 0.00 | 0.00 | 0.00 | 0.00 | 0.00 | 58.3 | 0.018 | 0.17 |
| S60 | 63.0 | 1.05 | 0.122 | 0.092 | 0.049 | Balance | 0.00 | 0.00 | 0.00 | 0.00 | 0.06 | 0.00 | 0.00 | 0.00 | 0.00 | 0.00 | 0.00 | 0.00 | 58.1 | 0.141 | 0.35 |
| S61 | 62.5 | 0.98 | 0.062 | 0.051 | 0.049 | Balance | 0.06 | 0.00 | 0.00 | 0.00 | 0.04 | 0.00 | 0.00 | 0.00 | 0.00 | 0.00 | 0.00 | 0.00 | 57.9 | 0.100 | 0.49 |
| S62 | 58.5 | 0.10 | 0.020 | 0.040 | 0.190 | Balance | 0.07 | 0.00 | 0.00 | 0.00 | 0.00 | 0.00 | 0.00 | 0.00 | 0.00 | 0.00 | 0.00 | 0.00 | 58.1 | 0.230 | 0.83 |
| S63 | 61.5 | 0.90 | 0.210 | 0.100 | 0.045 | Balance | 0.00 | 0.00 | 0.00 | 0.00 | 0.00 | 0.00 | 0.00 | 0.00 | 0.00 | 0.00 | 0.00 | 0.00 | 57.2 | 0.145 | 0.31 |

Note: "MM" refers to mischmetal.

EP 4 074 849 A1

34

Table 7

| Step A: Production step with the facility used for manufacturing commercial products (direct extrusion; bar) | | | | | | |
|---|---|---|---|---|---|---|
| Step No. | Hot Extrusion | | | | Cold Drawing | Note |
| | Diameter of Extruded Material (mm) | Temperature (°C) | Cooling Rate for 530-440°C (°C/min) | Cooling Rate for 400-200°C (°C/min) | Working Ratio (%) | |
| A1 | 25.6 | 580 | 30 | 25 | 4.6 | |
| A2 | 25.6 | 580 | 30 | 120 | 4.6 | |
| A3 | 25.6 | 680 | 30 | 25 | 4.6 | |
| A4 | 25.6 | 620 | 80 | 30 | 4.6 | |
| A10 | 45.0 | 550 | 20 | 40 | | To Step F (forging material) |

Table 8

| Step C: Extrusion in a Laboratory | | | | | | | | |
|---|---|---|---|---|---|---|---|---|
| Step No. | Hot Extrusion | | | | Cold Working | Heat Treatment | | Note |
| | Diameter of Extruded Material (mm) | Temperature (°C) | Cooling Rate for 530-440°C (°C/min) | Cooling Rate for 400-200°C (°C/min) | Working Ratio (%) | Temperature (°C) | Time (min) | |
| C0 | 25.6 | 820 or 590 | 25 | 20 | | 500 | 120 | |
| C1 | 25.6 | 590 | 25 | 20 | 4.6 | | | |
| C2 | 25.6 | 590 | 80 | 40 | 4.6 | | | |
| C3 | 25.6 | 590 | 25 | 3 | 4.6 | | | |
| C10 | 45.0 | 590 | 20 | 20 | | | | To Step F (forging material) |

Table 9

| Step D: Casting (production of castings with a forging material) | | | | |
|---|---|---|---|---|
| Step No. | Diameter (mm) | Cooling Rate for 530-440°C (°C/min) | Cooling Rate for 400-200°C (°C/min) | Note |
| D1 | 30.0 | 40 | 30 | |
| D2 | 45.0 | 40 | 30 | To Step F (forging material) |

Table 10

| Step E: Laboratory (bar) | | | | | | | |
|---|---|---|---|---|---|---|---|
| Step No. | Hot Extrusion | | Cold Drawing 1 | | Annealing | | Cold Drawing 2 | |
| | Diameter of Extruded Material (mm) | Temperature (°C) | Diameter of Drawn Material (mm) | Working Ratio (%) | Temperature (°C) | Time (min) | Diameter of Drawn Material (mm) | Working Ratio (%) |
| E1 | 29.0 | 590 | 26.0 | 20 | 420 | 60 | 24.5 | 11 |

Table 11

| Step F: Hot forging in a laboratory | | | | |
|---|---|---|---|---|
| Step No. | Material (preceding step) | Temperature (°C) | Cooling Rate for 530-440°C (°C/min) | Cooling Rate for 400-200°C (°C/min) |
| F1 | A10,C10 | 620 | 28 | 20 |
| F2 | A10,C10 | 620 | 40 | 20 |
| F3 | D2 | 620 | 28 | 20 |
| F4 | A10,C10 | 620 | 28 | 150 |
| F5 | A10,C10 | 690 | 40 | 20 |
| F6 | A10,C10 | 620 | 28 | 3 |

Table 12

| Test No. | Alloy No. | Step No. | $\alpha$ phase (%) | $\beta$ phase (%) | y phase (%) | f5 | Presence of P Compound |
|---|---|---|---|---|---|---|---|
| T01 | S01 | A1 | 58 | 42 | 0 | 10.9 | A |
| T02 | S01 | A2 | 57 | 43 | 0 | 11.0 | A |
| T03 | S01 | A3 | 53 | 47 | 0 | 11.4 | A |
| T04 | S01 | A4 | 51 | 49 | 0 | 11.6 | B |
| T05 | S01 | D1 | 55 | 45 | 0 | 11.2 | A |
| T06 | S01 | E1 | 61 | 39 | 0 | 10.6 | A |
| T07 | S01 | F1 | 59 | 41 | 0 | 10.8 | A |
| T08 | S01 | F2 | 56 | 44 | 0 | 11.1 | A |
| T09 | S01 | F3 | 58 | 42 | 0 | 10.9 | A |
| T10 | S01 | F4 | 56 | 44 | 0 | 11.1 | A |
| T11 | S01 | F5 | 49 | 51 | 0 | 11.8 | A |
| T21 | S02 | A1 | 52 | 48 | 0 | 11.4 | A |
| T22 | S02 | A2 | 49 | 51 | 0 | 11.6 | A |
| T23 | S02 | A3 | 45 | 55 | 0 | 11.9 | A |
| T24 | S02 | A4 | 44 | 56 | 0 | 12.0 | B |
| T25 | S02 | D1 | 48 | 52 | 0 | 11.7 | A |
| T26 | S02 | E1 | 54 | 46 | 0 | 11.2 | A |
| T27 | S02 | F1 | 52 | 48 | 0 | 11.4 | A |

(continued)

| Test No. | Alloy No. | Step No. | α phase (%) | β phase (%) | y phase (%) | f5 | Presence of P Compound |
|---|---|---|---|---|---|---|---|
| T28 | S02 | F2 | 49 | 51 | 0 | 11.6 | A |
| T29 | S02 | F3 | 50 | 50 | 0 | 11.5 | A |
| T30 | S02 | F4 | 49 | 51 | 0 | 11.6 | A |
| T31 | S02 | F5 | 46 | 54 | 0 | 11.9 | A |
| T32 | S02 | F6 | 53 | 47 | 0 | 11.3 | A |

Table 13

| Test No. | Alloy No. | Step No. | Electrical Conductivity (%IACS) | Hardness (HV) | Impact Value at Normal Temp. (I-1) (J/cm2) | Impact Value at 200°C (I-2) (J/cm$^2$) | f7 | f8 |
|---|---|---|---|---|---|---|---|---|
| T01 | S01 | A1 | 16.1 | 169 | 29 | 27 | 910 | 0.93 |
| T02 | S01 | A2 | 16.1 | 171 | 30 | 30 | 937 | 1.00 |
| T03 | S01 | A3 | 16.3 | 158 | 32 | 30 | 894 | 0.94 |
| T04 | S01 | A4 | 16.4 | 172 | 29 | 29 | 926 | 1.00 |
| T05 | S01 | D1 | 16.1 | 126 | 51 | 51 | 900 | 1.00 |
| T06 | S01 | E1 | 16.0 | 190 | 22 | 21 | 891 | 0.95 |
| T07 | S01 | F1 | 16.2 | 139 | 37 | 36 | 846 | 0.97 |
| T08 | S01 | F2 | 16.2 | 142 | 35 | 34 | 840 | 0.97 |
| T09 | S01 | F3 | 16.2 | 141 | 34 | 33 | 822 | 0.97 |
| T10 | S01 | F4 | 16.2 | 145 | 41 | 40 | 928 | 0.98 |
| T11 | S01 | F5 | 16.5 | 132 | 38 | 38 | 814 | 1.00 |
| T21 | S02 | A1 | 17.5 | 172 | 28 | 26 | 910 | 0.93 |
| T22 | S02 | A2 | 17.5 | 174 | 28 | 26 | 921 | 0.93 |
| T23 | S02 | A3 | 17.7 | 159 | 29 | 26 | 856 | 0.90 |
| T24 | S02 | A4 | 17.8 | 173 | 29 | 27 | 932 | 0.93 |
| T25 | S02 | D1 | 17.5 | 128 | 44 | 41 | 849 | 0.93 |
| T26 | S02 | E1 | 17.4 | 186 | 22 | 20 | 872 | 0.91 |
| T27 | S02 | F1 | 17.6 | 140 | 35 | 33 | 828 | 0.94 |
| T28 | S02 | F2 | 17.6 | 144 | 34 | 31 | 840 | 0.91 |
| T29 | S02 | F3 | 17.6 | 138 | 36 | 32 | 828 | 0.89 |
| T30 | S02 | F4 | 17.6 | 147 | 40 | 36 | 930 | 0.90 |
| T31 | S02 | F5 | 17.9 | 132 | 37 | 33 | 803 | 0.89 |
| T32 | S02 | F6 | 17.5 | 137 | 35 | 31 | 811 | 0.89 |

Table 14

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T01 | S01 | A1 | 0.18 | 0.09 | 0.50 | 0.14 | 0.36 | 0.19 | 0.53 | 0.28 |

(continued)

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T02 | S01 | A2 | 0.18 | 0.08 | 0.44 | 0.13 | 0.36 | 0.17 | 0.47 | 0.27 |
| T03 | S01 | A3 | 0.20 | 0.11 | 0.55 | 0.16 | 0.39 | 0.23 | 0.59 | 0.31 |
| T04 | S01 | A4 | 0.19 | 0.11 | 0.58 | 0.15 | 0.38 | 0.23 | 0.61 | 0.31 |
| T05 | S01 | D1 | 0.18 | 0.09 | 0.50 | 0.14 | 0.37 | 0.18 | 0.49 | 0.28 |
| T06 | S01 | E1 | 0.21 | 0.12 | 0.57 | 0.17 | 0.37 | 0.23 | 0.62 | 0.30 |
| T07 | S01 | F1 | 0.18 | 0.09 | 0.50 | 0.14 | 0.36 | 0.18 | 0.50 | 0.27 |
| T08 | S01 | F2 | 0.19 | 0.09 | 0.47 | 0.14 | 0.37 | 0.19 | 0.51 | 0.28 |
| T09 | S01 | F3 | 0.18 | 0.09 | 0.50 | 0.14 | 0.37 | 0.18 | 0.49 | 0.28 |
| T10 | S01 | F4 | 0.17 | 0.07 | 0.41 | 0.12 | 0.35 | 0.16 | 0.46 | 0.26 |
| T11 | S01 | F5 | 0.19 | 0.11 | 0.58 | 0.15 | 0.37 | 0.21 | 0.57 | 0.29 |
| T21 | S02 | A1 | 0.18 | 0.08 | 0.44 | 0.13 | 0.37 | 0.20 | 0.54 | 0.29 |
| T22 | S02 | A2 | 0.17 | 0.07 | 0.41 | 0.12 | 0.36 | 0.19 | 0.53 | 0.28 |
| T23 | S02 | A3 | 0.19 | 0.11 | 0.58 | 0.15 | 0.39 | 0.24 | 0.62 | 0.32 |
| T24 | S02 | A4 | 0.19 | 0.11 | 0.58 | 0.15 | 0.38 | 0.24 | 0.63 | 0.31 |
| T25 | S02 | D1 | 0.18 | 0.08 | 0.44 | 0.13 | 0.36 | 0.19 | 0.53 | 0.28 |
| T26 | S02 | E1 | 0.19 | 0.11 | 0.58 | 0.15 | 0.37 | 0.22 | 0.59 | 0.30 |
| T27 | S02 | F1 | 0.17 | 0.08 | 0.47 | 0.13 | 0.35 | 0.19 | 0.54 | 0.27 |
| T28 | S02 | F2 | 0.19 | 0.08 | 0.42 | 0.14 | 0.36 | 0.20 | 0.56 | 0.28 |
| T29 | S02 | F3 | 0.18 | 0.08 | 0.44 | 0.13 | 0.36 | 0.19 | 0.53 | 0.28 |
| T30 | S02 | F4 | 0.16 | 0.07 | 0.44 | 0.12 | 0.34 | 0.17 | 0.50 | 0.26 |
| T31 | S02 | F5 | 0.19 | 0.10 | 0.53 | 0.15 | 0.38 | 0.23 | 0.61 | 0.31 |
| T32 | S02 | F6 | 0.18 | 0.09 | 0.50 | 0.14 | 0.37 | 0.21 | 0.57 | 0.29 |

Table 15

| Test No. | Alloy No. | Step No. | α phase (%) | β phase (%) | γ phase (%) | f5 | Presence of P Compound |
|---|---|---|---|---|---|---|---|
| T101 | S11 | C1 | 58 | 42 | 0 | 11.8 | A |
| T102 | S12 | C1 | 69 | 31 | 0 | 9.5 | A |
| T103 | S12.1 | C1 | 70 | 30 | 0 | 9.3 | A |
| T104 | S12.2 | C1 | 72 | 28 | 0 | 9.1 | A |
| T105 | S12.3 | C1 | 77 | 23 | 0 | 8.4 | A |
| T106 | S12.4 | C1 | 67 | 33 | 0 | 9.7 | A |
| T107 | S12.5 | C1 | 71 | 27 | 2 | 8.9 | A |
| T108 | S13 | C1 | 78 | 22 | 0 | 10.1 | A |
| T109 | S14 | C1 | 52 | 48 | 0 | 8.3 | A |
| T110 | S15 | C1 | 58 | 42 | 0 | 13.8 | A |
| T111 | S15.1 | C3 | 63 | 34 | 3 | 12.8 | A |

(continued)

| Test No. | Alloy No. | Step No. | α phase (%) | β phase (%) | γ phase (%) | f5 | Presence of P Compound |
|---|---|---|---|---|---|---|---|
| T112 | S16 | C1 | 53 | 47 | 0 | 11.5 | A |
| T113 | S16.1 | C2 | 46 | 54 | 0 | 12.2 | B |
| T114 | S17 | C2 | 74 | 26 | 0 | 9.7 | A |
| T115 | S18 | C1 | 40 | 60 | 0 | 13.7 | A |
| T116 | S18.1 | C1 | 37 | 63 | 0 | 13.9 | A |
| T117 | S18.2 | C1 | 41 | 58 | 1 | 13.4 | A |
| T118 | S19 | C1 | 65 | 35 | 0 | 11.4 | A |
| T119 | S20 | C1 | 35 | 65 | 0 | 11.4 | A |

Table 16

| Test No. | Alloy No. | Step No. | Electrical Conductivity (%IACS) | Hardness (HV) | Impact Value at Normal Temp. (I-1) (J/cm$^2$) | Impact Value at 200°C (1-2) (J/cm$^2$) | f7 | f8 |
|---|---|---|---|---|---|---|---|---|
| T101 | S11 | C1 | 15.5 | 170 | 29 | 28 | 915 | 0.97 |
| T102 | S12 | C1 | 16.6 | 162 | 30 | 28 | 887 | 0.93 |
| T103 | S12.1 | C1 | 16.4 | 165 | 28 | 26 | 873 | 0.93 |
| T104 | S12.2 | C1 | 16.1 | 167 | 27 | 25 | 868 | 0.93 |
| T105 | S12.3 | C1 | 16.0 | 169 | 26 | 24 | 862 | 0.92 |
| T106 | S12.4 | C1 | 16.5 | 166 | 25 | 20 | 830 | 0.80 |
| T107 | S12.5 | C1 | 16.4 | 170 | 20 | 12 | 760 | 0.60 |
| T108 | S13 | C1 | 15.9 | 157 | 34 | 30 | 915 | 0.88 |
| T109 | S14 | C1 | 18.4 | 172 | 29 | 29 | 926 | 1.00 |
| T110 | S15 | C1 | 14.3 | 173 | 26 | 19 | 882 | 0.73 |
| T111 | S15.1 | C3 | 14.2 | 179 | 17 | 11 | 738 | 0.65 |
| T112 | S16 | C1 | 16.9 | 173 | 28 | 27 | 915 | 0.96 |
| T113 | S16.1 | C2 | 16.9 | 174 | 29 | 28 | 937 | 0.97 |
| T114 | S17 | C2 | 16.3 | 160 | 31 | 25 | 891 | 0.81 |
| T115 | S18 | C1 | 14.8 | 184 | 21 | 17 | 843 | 0.81 |
| T116 | S18.1 | C1 | 14.6 | 187 | 18 | 15 | 793 | 0.83 |
| T117 | S18.2 | C1 | 14.7 | 192 | 15 | 11 | 744 | 0.73 |
| T118 | S19 | C1 | 13.8 | 170 | 28 | 21 | 900 | 0.75 |
| T119 | S20 | C1 | 20.6 | 177 | 23 | 20 | 849 | 0.87 |

Table 17

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T101 | S11 | C1 | 0.16 | 0.09 | 0.56 | 0.13 | 0.34 | 0.19 | 0.56 | 0.27 |
| T102 | S12 | C1 | 0.19 | 0.10 | 0.53 | 0.15 | 0.38 | 0.21 | 0.55 | 0.30 |

(continued)

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T103 | S12.1 | C1 | 0.19 | 0.11 | 0.58 | 0.15 | 0.39 | 0.22 | 0.56 | 0.31 |
| T104 | S12.2 | C1 | 0.20 | 0.12 | 0.60 | 0.16 | 0.40 | 0.28 | 0.70 | 0.34 |
| T105 | S12.3 | C1 | 0.21 | 0.15 | 0.71 | 0.18 | 0.42 | 0.34 | 0.81 | 0.38 |
| T106 | S12.4 | C1 | 0.19 | 0.11 | 0.58 | 0.15 | 0.39 | 0.23 | 0.59 | 0.31 |
| T107 | S12.5 | C1 | 0.21 | 0.14 | 0.67 | 0.18 | 0.41 | 0.30 | 0.73 | 0.36 |
| T108 | S13 | C1 | 0.20 | 0.11 | 0.55 | 0.16 | 0.40 | 0.24 | 0.60 | 0.32 |
| T109 | S14 | C1 | 0.21 | 0.13 | 0.62 | 0.17 | 0.40 | 0.28 | 0.70 | 0.34 |
| T110 | S15 | C1 | 0.16 | 0.07 | 0.44 | 0.12 | 0.34 | 0.16 | 0.47 | 0.25 |
| T111 | S15.1 | C3 | 0.16 | 0.08 | 0.50 | 0.12 | 0.36 | 0.18 | 0.50 | 0.27 |
| T112 | S16 | C1 | 0.18 | 0.08 | 0.44 | 0.13 | 0.36 | 0.20 | 0.56 | 0.28 |
| T113 | S16.1 | C2 | 0.19 | 0.11 | 0.58 | 0.15 | 0.39 | 0.25 | 0.64 | 0.32 |
| T114 | S17 | C2 | 0.18 | 0.11 | 0.61 | 0.15 | 0.40 | 0.24 | 0.60 | 0.32 |
| T115 | S18 | C1 | 0.16 | 0.07 | 0.44 | 0.12 | 0.35 | 0.20 | 0.57 | 0.28 |
| T116 | S18.1 | C1 | 0.17 | 0.08 | 0.47 | 0.13 | 0.38 | 0.25 | 0.66 | 0.32 |
| T117 | S18.2 | C1 | 0.19 | 0.10 | 0.53 | 0.15 | 0.40 | 0.28 | 0.70 | 0.34 |
| T118 | S19 | C1 | 0.17 | 0.09 | 0.53 | 0.13 | 0.36 | 0.20 | 0.56 | 0.28 |
| T119 | S20 | C1 | 0.18 | 0.08 | 0.44 | 0.13 | 0.37 | 0.25 | 0.68 | 0.31 |

Table 18

| Test No. | Alloy No. | Step No. | α phase (%) | β phase (%) | γ phase (%) | f5 | Presence of P Compound |
|---|---|---|---|---|---|---|---|
| T120 | S20.1 | C2 | 28 | 72 | 0 | 11.8 | A |
| T121 | S21 | C1 | 51 | 49 | 0 | 10.5 | A |
| T122 | S21.1 | C2 | 45 | 55 | 0 | 11.0 | B |
| T123 | S22 | F1 | 56 | 44 | 0 | 9.7 | A |
| T124 | S23 | C1 | 52 | 48 | 0 | 10.3 | B |
| T125 | S24 | C1 | 62 | 38 | 0 | 9.2 | A |
| T126 | S24.1 | C1 | 67 | 33 | 0 | 8.9 | A |
| T127 | S24.2 | C1 | 70 | 30 | 0 | 8.5 | A |
| T128 | S25 | F1 | 54 | 46 | 0 | 12.4 | A |
| T129 | S25.1 | F4 | 53 | 47 | 0 | 12.5 | A |
| T130 | S25.2 | F5 | 48 | 52 | 0 | 13.0 | A |
| T131 | S26 | C1 | 43 | 57 | 0 | 13.5 | A |
| T132 | S26.1 | C3 | 48 | 50 | 2 | 12.8 | A |
| T133 | S27 | F1 | 52 | 48 | 0 | 10.5 | A |
| T134 | S28 | D1 | 62 | 38 | 0 | 10.0 | A |
| T135 | S28.1 | F3 | 64 | 36 | 0 | 9.8 | A |

(continued)

| Test No. | Alloy No. | Step No. | α phase (%) | β phase (%) | γ phase (%) | f5 | Presence of P Compound |
|---|---|---|---|---|---|---|---|
| T136 | S29 | C1 | 48 | 52 | 0 | 10.6 | A |
| T137 | S30 | F1 | 57 | 43 | 0 | 10.8 | A |
| T138 | S31 | C1 | 53 | 47 | 0 | 9.4 | C |

Table 19

| Test No. | Alloy No. | Step No. | Electrical Conductivity (%IACS) | Hardness (HV) | Impact Value at Normal Temp. (I-1) (J/cm$^2$) | Impact Value at 200°C (1-2) (J/cm$^2$) | f7 | f8 |
|---|---|---|---|---|---|---|---|---|
| T120 | S20.1 | C2 | 20.9 | 179 | 19 | 16 | 780 | 0.84 |
| T121 | S21 | C1 | 16.3 | 175 | 27 | 27 | 909 | 1.00 |
| T122 | S21.1 | C2 | 16.3 | 176 | 25 | 25 | 880 | 1.00 |
| T123 | S22 | F1 | 16.8 | 138 | 37 | 37 | 839 | 1.00 |
| T124 | S23 | C1 | 18.8 | 171 | 26 | 25 | 872 | 0.96 |
| T125 | S24 | C1 | 19.4 | 171 | 26 | 23 | 872 | 0.88 |
| T126 | S24.1 | C1 | 19.0 | 174 | 24 | 21 | 852 | 0.88 |
| T127 | S24.2 | C1 | 18.7 | 167 | 23 | 21 | 801 | 0.91 |
| T128 | S25 | F1 | 15.3 | 141 | 34 | 32 | 822 | 0.94 |
| T129 | S25.1 | F4 | 15.3 | 147 | 38 | 37 | 906 | 0.97 |
| T130 | S25.2 | F5 | 15.3 | 134 | 36 | 34 | 804 | 0.94 |
| T131 | S26 | C1 | 15.2 | 181 | 22 | 15 | 849 | 0.68 |
| T132 | S26.1 | C3 | 15.3 | 187 | 17 | 11 | 771 | 0.65 |
| T133 | S27 | F1 | 17.6 | 140 | 35 | 32 | 828 | 0.91 |
| T134 | S28 | D1 | 18.0 | 119 | 54 | 53 | 874 | 0.98 |
| T135 | S28.1 | F3 | 18.0 | 130 | 42 | 41 | 842 | 0.98 |
| T136 | S29 | C1 | 19.0 | 174 | 24 | 16 | 852 | 0.67 |
| T137 | S30 | F1 | 16.4 | 137 | 37 | 34 | 833 | 0.92 |
| T138 | S31 | C1 | 17.3 | 169 | 29 | 28 | 910 | 0.97 |

Table 20

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T120 | S20.1 | C2 | 0.17 | 0.08 | 0.47 | 0.13 | 0.38 | 0.28 | 0.74 | 0.33 |
| T121 | S21 | C1 | 0.18 | 0.08 | 0.44 | 0.13 | 0.38 | 0.20 | 0.53 | 0.29 |
| T122 | S21.1 | C2 | 0.19 | 0.09 | 0.47 | 0.14 | 0.39 | 0.23 | 0.59 | 0.31 |
| T123 | S22 | F1 | 0.18 | 0.10 | 0.56 | 0.14 | 0.39 | 0.24 | 0.62 | 0.32 |
| T124 | S23 | C1 | 0.19 | 0.12 | 0.63 | 0.16 | 0.38 | 0.26 | 0.68 | 0.32 |
| T125 | S24 | C1 | 0.19 | 0.11 | 0.58 | 0.15 | 0.38 | 0.23 | 0.61 | 0.31 |
| T126 | S24.1 | C1 | 0.20 | 0.13 | 0.65 | 0.17 | 0.40 | 0.27 | 0.68 | 0.34 |

(continued)

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T127 | S24.2 | C1 | 0.22 | 0.15 | 0.68 | 0.19 | 0.42 | 0.34 | 0.81 | 0.38 |
| T128 | S25 | F1 | 0.16 | 0.08 | 0.50 | 0.12 | 0.34 | 0.18 | 0.53 | 0.26 |
| T129 | S25.1 | F4 | 0.16 | 0.07 | 0.44 | 0.12 | 0.33 | 0.16 | 0.48 | 0.25 |
| T130 | S25.2 | F5 | 0.18 | 0.10 | 0.56 | 0.14 | 0.36 | 0.20 | 0.56 | 0.28 |
| T131 | S26 | C1 | 0.16 | 0.07 | 0.44 | 0.12 | 0.34 | 0.18 | 0.53 | 0.26 |
| T132 | S26.1 | C3 | 0.17 | 0.07 | 0.41 | 0.12 | 0.36 | 0.20 | 0.56 | 0.28 |
| T133 | S27 | F1 | 0.17 | 0.08 | 0.47 | 0.13 | 0.37 | 0.19 | 0.51 | 0.28 |
| T134 | S28 | D1 | 0.18 | 0.10 | 0.56 | 0.14 | 0.39 | 0.21 | 0.54 | 0.30 |
| T135 | S28.1 | F3 | 0.18 | 0.09 | 0.50 | 0.14 | 0.40 | 0.21 | 0.53 | 0.31 |
| T136 | S29 | C1 | 0.18 | 0.08 | 0.44 | 0.13 | 0.35 | 0.21 | 0.60 | 0.28 |
| T137 | S30 | F1 | 0.18 | 0.09 | 0.50 | 0.14 | 0.36 | 0.20 | 0.56 | 0.28 |
| T138 | S31 | C1 | 0.20 | 0.12 | 0.60 | 0.16 | 0.39 | 0.29 | 0.74 | 0.34 |

Table 21

| Test No. | Alloy No. | Step No. | $\alpha$ phase (%) | $\beta$ phase (%) | $\gamma$ phase (%) | f5 | Presence of P Compound |
|---|---|---|---|---|---|---|---|
| T201 | S41 | C0 | 100 | 0 | 0 | | |
| T202 | S42 | C0 | 0 | 100 | 0 | | |
| T203 | S43 | C0 | 0 | 100 | 0 | | |
| T204 | S44 | C0 | 0 | 100 | 0 | | A |
| T205 | S45 | * | | | | | |
| * commercially available alloy | | | | | | | |

Table 22

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T201 | S41 | C0 | 0.44 | 0.43 | 0.98 | 0.44 | - | - | - | - |
| T202 | S42 | C0 | 0.30 | 0.27 | 0.90 | 0.29 | 0.58 | 0.54 | 0.93 | 0.56 |
| T203 | S43 | C0 | 0.18 | 0.11 | 0.61 | 0.15 | 0.42 | 0.37 | 0.88 | 0.40 |
| T204 | S44 | C0 | 0.16 | 0.07 | 0.44 | 0.12 | 0.39 | 0.32 | 0.82 | 0.36 |
| T205 | S45 | * | 0.17 | 0.06 | 0.35 | 0.12 | 0.34 | 0.14 | 0.41 | 0.24 |
| * commercially available alloy | | | | | | | | | | |

Table 23

| Test No. | Alloy No. | Step No. | $\alpha$ phase (%) | $\beta$ phase (%) | $\gamma$ phase (%) | f5 | Presence of P Compound |
|---|---|---|---|---|---|---|---|
| T301 | S51 | C1 | 79 | 17 | 4 | 8.3 | A |
| T302 | S52 | C1 | 54 | 46 | 0 | 14.0 | A |

(continued)

| Test No. | Alloy No. | Step No. | α phase (%) | β phase (%) | γ phase (%) | f5 | Presence of P Compound |
|---|---|---|---|---|---|---|---|
| T303 | S52.1 | F1 | 53 | 47 | 0 | 14.1 | A |
| T304 | S53 | C1 | 60 | 40 | 0 | 5.9 | A |
| T305 | S54 | C1 | 18 | 82 | 0 | 13.6 | A |
| T306 | S54.1 | F1 | 16 | 84 | 0 | 13.7 | A |
| T307 | S55 | C1 | 57 | 43 | 0 | - | C |
| T308 | S56 | C1 | 64 | 36 | 0 | 7.6 | A |
| T309 | S57 | C1 | 88 | 12 | 0 | 7.3 | A |
| T310 | S58 | C1 | 54 | 46 | 0 | 7.8 | A |
| T311 | S59 | F1 | 62 | 38 | 0 | 6.6 | A |
| T312 | S60 | C1 | 55 | 45 | 0 | 12.8 | A |
| T313 | S61 | C1 | 53 | 47 | 0 | 11.6 | A |
| T314 | S62 | C1 | 54 | 46 | 0 | - | A |
| T315 | S63 | C1 | 39 | 61 | 0 | 14.0 | A |

Table 24

| Test No. | Alloy No. | Step No. | Electrical Conductivity (%IACS) | Hardness (HV) | Impact Value at Normal Temp. (I-1) (J/cm$^2$) | Impact Value at 200°C (1-2) (J/cm$^2$) | f7 | f8 |
|---|---|---|---|---|---|---|---|---|
| T301 | S51 | C1 | 12.8 | 170 | 15 | 11 | 658 | 0.73 |
| T302 | S52 | C1 | 15.5 | 173 | 25 | 9 | 865 | 0.36 |
| T303 | S52.1 | F1 | 15.5 | 139 | 33 | 10 | 798 | 0.30 |
| T304 | S53 | C1 | 23.8 | 162 | 31 | 28 | 902 | 0.90 |
| T305 | S54 | C1 | 18.8 | 189 | 14 | 13 | 707 | 0.93 |
| T306 | S54.1 | F1 | 18.8 | 133 | 17 | 15 | 548 | 0.88 |
| T307 | S55 | C1 | 20.1 | 166 | 30 | 28 | 909 | 0.93 |
| T308 | S56 | C1 | 21.7 | 161 | 31 | 25 | 896 | 0.81 |
| T309 | S57 | C1 | 19.2 | 144 | 37 | 34 | 876 | 0.92 |
| T310 | S58 | C1 | 18.0 | 173 | 26 | 26 | 882 | 1.00 |
| T311 | S59 | F1 | 20.4 | 129 | 41 | 41 | 826 | 1.00 |
| T312 | S60 | C1 | 16.1 | 171 | 26 | 11 | 872 | 0.42 |
| T313 | S61 | C1 | 16.8 | 172 | 25 | 11 | 860 | 0.44 |
| T314 | S62 | C1 | 25.6 | 171 | 27 | 8 | 889 | 0.30 |
| T315 | S63 | C1 | 16.7 | 180 | 15 | 11 | 697 | 0.73 |

Table 25

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T301 | S51 | C1 | 0.21 | 0.14 | 0.67 | 0.18 | 0.42 | 0.33 | 0.79 | 0.38 |

(continued)

| Test No. | Alloy No. | Step No. | Lathe No. 1 Cutting Speed: 40 m/min | | | | Lathe No. 2 Cutting Speed: 172 m/min | | | |
|---|---|---|---|---|---|---|---|---|---|---|
| | | | H1 (mm) | H2 (mm) | f6 | f6A | H1 (mm) | H2 (mm) | f6 | f6A |
| T302 | S52 | C1 | 0.16 | 0.07 | 0.44 | 0.12 | 0.31 | 0.17 | 0.55 | 0.24 |
| T303 | S52.1 | F1 | 0.16 | 0.08 | 0.50 | 0.12 | 0.32 | 0.17 | 0.53 | 0.25 |
| T304 | S53 | C1 | 0.29 | 0.25 | 0.86 | 0.27 | 0.53 | 0.50 | 0.94 | 0.52 |
| T305 | S54 | C1 | 0.16 | 0.07 | 0.44 | 0.12 | 0.40 | 0.32 | 0.80 | 0.36 |
| T306 | S54.1 | F1 | 0.16 | 0.07 | 0.44 | 0.12 | 0.39 | 0.32 | 0.82 | 0.36 |
| T307 | S55 | C1 | 0.21 | 0.15 | 0.71 | 0.18 | 0.43 | 0.35 | 0.81 | 0.39 |
| T308 | S56 | C1 | 0.22 | 0.14 | 0.64 | 0.18 | 0.44 | 0.35 | 0.80 | 0.40 |
| T309 | S57 | C1 | 0.23 | 0.20 | 0.87 | 0.22 | 0.48 | 0.45 | 0.94 | 0.47 |
| T310 | S58 | C1 | 0.21 | 0.13 | 0.62 | 0.17 | 0.43 | 0.35 | 0.81 | 0.39 |
| T311 | S59 | F1 | 0.24 | 0.16 | 0.67 | 0.20 | 0.45 | 0.37 | 0.82 | 0.41 |
| T312 | S60 | C1 | 0.17 | 0.08 | 0.47 | 0.13 | 0.36 | 0.17 | 0.47 | 0.27 |
| T313 | S61 | C1 | 0.18 | 0.08 | 0.44 | 0.13 | 0.37 | 0.18 | 0.49 | 0.28 |
| T314 | S62 | C1 | 0.26 | 0.24 | 0.92 | 0.25 | 0.51 | 0.49 | 0.96 | 0.50 |
| T315 | S63 | C1 | 0.18 | 0.06 | 0.33 | 0.12 | 0.37 | 0.19 | 0.51 | 0.28 |

From the above-described measurement results, the following findings were obtained.

1) By satisfying a composition according to an embodiment of the present invention, the composition relational expressions f1 to f3, the metallographic structure relational expression f4, and the composition and metallographic structure relational expression f5, good machinability and chip breakability (characteristic relational expressions f6 and f6A) were obtained. Further, there was almost no decrease in toughness at 200°C, and at about 600°C, good hot workability, high electrical conductivity of 13% IACS or higher, high strength, and good toughness in addition to superb balance between strength and toughness (characteristic relational expression f7) were obtained. It was able to verify that a hot worked material (hot extruded material or hot forged material) or a casting having the above-described excellent properties could be obtained (Alloys Nos. S01, S02, and S11 to S31; respective steps).

2) When the Cu content was 64.7 mass% or more, $\gamma$ phase was present, toughness was low, and chip breakability was poor (Alloy No. S51).

3) When the Si content was less than 0.6 mass%, chip breakability was poor. When the Si content was more than 0.60 mass%, chip breakability was better. When the Si content was more than 0.75 mass%, chip breakability was further improved. When the Si content was 1.30 mass% or more, $\gamma$ phase appeared, and toughness decreased (for example, Alloys Nos. S01, S51, S53, and S56).

4) When the P content was 0.001 mass% or less, chip breakability was poor. When the P content was more than 0.001 mass%, chip breakability was better, and the defined chip breakability was barely satisfied even if P compounds were not observed. When the P content was more than 0.010 mass%, the machinability was further improved. When the P-containing compounds were present and were able to be observed with a metallographic microscope, chip breakability was further improved. It is presumed that the inclusion of P and the presence of the P-containing compounds improve the machinability of $\beta$ phase and also that of the alloy (for example, Alloys Nos. S01, S23, S31, and S55).

5) When the Pb content was more than 0.001 mass%, the Bi content was more than 0.001 mass%, and the total content of Bi and Pb (f2) was 0.003 mass% or more, the machinability was satisfactory. When the Bi content was 0.002 mass% or more, the Pb content was 0.002 mass% or more, and the total content of Bi and Pb (f2) was 0.005 mass% or more, and further, 0.020 mass% or more, the machinability was more satisfactory (Alloys Nos. S01, S14, and S58). Even when the Bi content was less than 0.020 mass%, as long as f1 to f5 were in the defined ranges, satisfactory chip breakability was exhibited. In particular, little decrease was observed in the toughness at 200°C (for example, Alloys Nos. S01, S11, S21, and S22).

6) It was verified that, even if inevitable impurities are included in an amount actually included in a commercially manufactured alloy, there is no significant influence on the properties (Alloys Nos. S12, S12.1, S12.4, S18, and S24). It is presumed that when Fe, Mn, Co, or Cr is contained in an amount exceeding the preferable range of inevitable impurities, intermetallic compounds comprising Fe, Mn, or the like and Si are formed. It is presumed that the chip breakability deteriorated due to the presence of the compounds comprising Fe or the like and Si, a decrease in the concentration of Si that acts effectively on chip breakability, and a possible change in the composition of P-containing compounds (Alloys Nos. S12.3 and S18.2). It is considered that when Sn and/or Al were contained in an amount exceeding the upper limit of the preferable range of inevitable impurities, $\gamma$ phase appeared, $\beta$ phase decreased, or the behavior of $\beta$ phase changed. Consequently, the impact value decreased, the balance index f7 decreased, and the chip breakability deteriorated (Alloys Nos. S12.5 and S24.2).

7) When the composition relational expression f1 was lower than 56.7, the amount of $\beta$ phase was higher and toughness was lower. In addition, chip breakability when machined under a high-speed and a high-feed condition was poorer. When f1 exceeded 59.7, chip breakability deteriorated (Alloys Nos. S54 and S57).

8) When $0.08 \leq [Pb] + [Bi] = f2 < 0.13$, if $0.40 < f3 = [Bi]/([Pb] + [Bi]) < 0.85$, the impact value at 200°C in u-notch impact testing was low, the temperature sensitivity of impact value was high, and the value of f8 was low (Alloy No. S61).

When $0.13 \leq [Pb] + [Bi]$, if $0.33 < f3 = [Bi]/([Pb] + [Bi])$, the impact value at 200°C in u-notch impact testing was low, the temperature sensitivity of impact value was high, and the value of f8 was low (Alloys Nos. S52 and S60).

When $0.08 \leq [Pb] + [Bi] < 0.15$, if $f3 = [Bi]/([Pb] + [Bi]) \leq 0.33$, the toughness at 200°C was hardly impaired (for example, Alloys Nos. S01 and S16).

Regarding the index of temperature sensitivity of embrittlement f8 at 200°C, Example alloys of the instant invention exhibited a high f8 value of 0.65 or higher, and most of the Comparative Example alloys not satisfying f3 exhibited a f8 value of below 0.5 (for example, Alloys Nos. S26 and S61).

9) When the amount of $\beta$ phase (f4) was less than 17, chip breakability was poor (Alloy No. S57). When f4 was higher than 75, chip breakability was poor when machined at a high speed and a high feed, and toughness was low (Alloy No. S54). When f4 was 30 or higher, the chip breakability index f6 was better. When f4 was 64 or lower, chip breakability when machined under a high-speed and high-feed condition was better. In addition, the balance between strength and toughness (f7) was better (for example, Alloy No. S01). When $\gamma$ phase was contained, toughness was poorer (Alloys Nos. S51 and S15.1).

10) When the composition and metallographic structure relational expression f5 was not satisfied, even if the composition and the other relational expressions were satisfied, chip breakability was poor (Alloy No. S59). When f5 was 8.5 or higher, or further, 9.5 or higher, further improved chip breakability was obtained, and in many of the Example alloys, their chip breakability index f6 satisfied $0.35 \leq f6 = H2/H1 \leq 0.65$. Likewise, by satisfying f1 to f5, the average chip thickness (f6A) became about 1.1 to about 1.6 times the feed "f". When f1 to f5 were in their preferable ranges, in many of the Example alloys, f6A was about 1.1 to about 1.4 times the feed "f", verifying that satisfactory machining was performed with good chip breakability (for example, Alloy No. S01).

11) When hot working conditions including cooling changed, the proportion of $\beta$ phase changed, and $\gamma$ phase appeared in some cases, which affected machinability, hardness, toughness, and electrical conductivity (for example, Alloys Nos. S01, S15, S26, and S26.1; respective steps).

12) In an alloy containing more than or equal to 0.010 mass% P, when the average cooling rate in the temperature range from 530°C to 440°C in the cooling step after hot extrusion and hot forging was 70 °C/min or lower, presence of P-containing compounds was able to be confirmed (Alloy No. S29). Alloys rated as "A" in the evaluation of P-containing compounds had better chip breakability than those rated as "B" (for example, Alloys Nos. S02, S21, and S21.1; respective steps).

13) When the average cooling rate in the temperature range from 400°C to 200°C in the cooling step after hot extrusion and hot forging was lower than 5 °C/min, $\gamma$ phase was present and the impact value was low in some of the alloys. When the average cooling rate in the temperature range from 400°C to 200°C was 75 °C/min or higher, f7 was high, and improved chip breakability was obtained (Alloys Nos. S15.1 and S26.1; Steps Nos. A2, C3, F4, and F6).

As described above, free-cutting copper alloys in which the contents of the respective elements added, the composition relational expressions f1 to f3, and the metallographic structure relational expression f4, and the composition and metallographic structure relational expression f5 are in appropriate ranges like embodiments of the present invention have excellent hot workability (in hot extrusion and hot forging). Also, they have good machinability and mechanical characteristics. Free-cutting copper alloys according to an embodiment of the present invention can achieve more excellent properties by appropriately adjusting production conditions in hot extrusion and hot forging as well as heat treatment conditions.

Industrial Applicability

Free-cutting copper alloys according to an embodiment of the present invention have excellent machinability and hot workability, high strength, and excellent balance between strength and elongation although the amounts of Pb and Bi contained are small. Therefore, free-cutting copper alloys according to an embodiment of the present invention are suitable for automobile components, electrical and electronic apparatus components, mechanical components, stationaries, toys, sliding components, measuring instrument components, precision mechanical components, medical components, drink-related devices and components, devices and components for water drainage, industrial plumbing components, and components relating to liquid or gas such as drinking water, industrial water, drainage water, or hydrogen.

Specifically, free-cutting copper alloys according to an embodiment of the present invention are suitably applicable as a material that constitutes the items used in the above-mentioned fields which go by the names including valve, joint, cock, faucet, gear, axle, bearing, shaft, sleeve, spindle, sensor, bolt, nut, worm gear, terminal, horn contact, flare nut, control valve, shut-off valve, check valve, pen point, insert nut, cap nut, nipple, spacer, and screw.

**Claims**

1. A free-cutting copper alloy comprising:

   higher than 59.7 mass% and lower than 64.7 mass% of Cu;
   higher than 0.60 mass% and lower than 1.30 mass% of Si;
   higher than 0.001 mass% and lower than 0.20 mass% of Pb;
   higher than 0.001 mass% and lower than 0.10 mass% of Bi; and
   higher than 0.001 mass% and lower than 0.15 mass% of P,
   with the balance being Zn and inevitable impurities,
   wherein among the inevitable impurities, the total content of Fe, Mn, Co, and Cr is lower than 0.45 mass% and the total content of Sn and Al is lower than 0.45 mass%,
   when Cu content is represented by [Cu] mass%, Si content is represented by [Si] mass%, Pb content is represented by [Pb] mass%, Bi content is represented by [Bi] mass%, and P content is represented by [P] mass%, relationships of

$$56.7 \leq f1 = [Cu] - 4.7 \times [Si] + 0.5 \times [Pb] + 0.5 \times [Bi] - 0.5 \times [P] \leq 59.7,$$

$$0.003 \leq f2 = [Pb] + [Bi] < 0.25,$$

$$if\ 0.003 \leq [Pb] + [Bi] < 0.08,\ 0.02 \leq f3 = [Bi]/([Pb] + [Bi]) \leq 0.98,$$

$$if\ 0.08 \leq [Pb] + [Bi] < 0.13,\ 0.01 \leq f3 = [Bi]/([Pb] + [Bi]) \leq 0.40\ or\ 0.85 \leq f3 =$$

$$[Bi]/([Pb] + [Bi]) \leq 0.98,$$

   and

$$if\ 0.13 \leq [Pb] + [Bi] < 0.25,\ 0.01 \leq f3 = [Bi]/([Pb] + [Bi]) \leq 0.33$$

   are satisfied,
   the metallographic structure comprises $\alpha$ phase and $\beta$ phase, and when area ratio of $\alpha$ phase is represented by $(\alpha)$% and area ratio of $\beta$ phase is represented by $(\beta)$%, relationships of

$$17 \leq f4 = (\beta) \leq 75$$

and

$$7.0 \leq f5 = ([\mathrm{Bi}] + [\mathrm{Pb}] - 0.001)^{1/2} \times 10 + ([\mathrm{P}] - 0.001)^{1/2} \times 5 + ((\beta) - 8)^{1/2} \times ([\mathrm{Si}] -$$

$$0.2)^{1/2} \times 1.3 \leq 16.0$$

are satisfied.

2. The free-cutting copper alloy according to claim 1,

wherein when the alloy is turned by a lathe with a tool attached and a longitudinal cross section of a produced chip is observed, it can be recognized that the chip is a shear type chip whose cross section has a zigzag shape, when the surface of the chip that came in contact with the tool during turning is denominated as a machined surface and its reverse surface is denominated as a free surface, convex portions jutting toward the free surface and concave portions dented toward the machined surface are alternately positioned along the longitudinal direction of the chip, and
when an average height from the machined surface to the tips of the convex portions is represented by H1, and an average distance from the machined surface to the deepest points of the concave portions is represented by H2,

$$0.25 \leq f6 = \mathrm{H2/H1} \leq 0.80$$

is satisfied.

3. A free-cutting copper alloy comprising:

higher than or equal to 60.5 mass% and lower than or equal to 64.0 mass% of Cu;
higher than or equal to 0.75 mass% and lower than or equal to 1.25 mass% of Si;
higher than or equal to 0.002 mass% and lower than 0.15 mass% of Pb;
higher than or equal to 0.002 mass% and lower than 0.05 mass% of Bi; and
higher than or equal to 0.005 mass% and lower than 0.10 mass% of P,
with the balance being Zn and inevitable impurities,
wherein among the inevitable impurities, the total content of Fe, Mn, Co, and Cr is lower than or equal to 0.35 mass%, the total content of Sn and Al is lower than or equal to 0.35 mass%, the content of each of As and Sb is lower than or equal to 0.05 mass%, and the content of Cd is lower than or equal to 0.01 mass%,
when Cu content is represented by [Cu] mass%, Si content is represented by [Si] mass%, Pb content is represented by [Pb] mass%, Bi content is represented by [Bi] mass%, and P content is represented by [P] mass%, relationships of

$$57.0 \leq f1 = [\mathrm{Cu}] - 4.7 \times [\mathrm{Si}] + 0.5 \times [\mathrm{Pb}] + 0.5 \times [\mathrm{Bi}] - 0.5 \times [\mathrm{P}] \leq 59.0,$$

$$0.005 \leq f2 = [\mathrm{Pb}] + [\mathrm{Bi}] < 0.15,$$

$$\text{if } 0.005 \leq [\mathrm{Pb}] + [\mathrm{Bi}] < 0.08,\ 0.03 \leq f3 = [\mathrm{Bi}]/([\mathrm{Pb}] + [\mathrm{Bi}]) \leq 0.96,$$

and

$$\text{if } 0.08 \leq [\mathrm{Pb}] + [\mathrm{Bi}] < 0.15,\ 0.02 \leq f3 = [\mathrm{Bi}]/([\mathrm{Pb}] + [\mathrm{Bi}]) \leq 0.33$$

are satisfied,
the metallographic structure comprises $\alpha$ phase and $\beta$ phase, and in constituent phases of the metallographic structure, when area ratio of $\alpha$ phase is represented by $(\alpha)\%$ and area ratio of $\beta$ phase is represented by $(\beta)\%$,

relationships of

$$30 \leq f4 = (\beta) \leq 64$$

and

$$8.5 \leq f5 = ([Bi] + [Pb] - 0.001)^{1/2} \times 10 + ([P] - 0.001)^{1/2} \times 5 + ((\beta) - 8)^{1/2} \times ([Si] - 0.2)^{1/2} \times 1.3 \leq 14.0$$

are satisfied, and
P-containing compounds are present in the metallographic structure.

4. The free-cutting copper alloy according to claim 3,

wherein when the alloy is turned by a lathe with a tool attached and a longitudinal cross section of a produced chip is observed, it can be recognized that the chip is a shear type chip whose cross section has a zigzag shape, when the surface of the chip that came in contact with the tool during turning is denominated as a machined surface and its reverse surface is denominated as a free surface, convex portions jutting toward the free surface and concave portions dented toward the machined surface are alternately positioned along the longitudinal direction of the chip, and
when an average height from the machined surface to the tips of the convex portions is represented by H1, and an average distance from the machined surface to the deepest points of the concave portions is represented by H2,

$$0.35 \leq f6 = H2/H1 \leq 0.65$$

is satisfied.

5. The free-cutting copper alloy according to any one of claims 1 to 4,

wherein the electrical conductivity is 13% IACS or higher,
when a Charpy impact test using specimens with a U-shaped notch is performed, the impact test value at normal temperature, I-1 ($J/cm^2$), is 15 $J/cm^2$ or higher, the impact test value when heated to 200°C, 1-2 ($J/cm^2$), is 12 $J/cm^2$ or higher, and the Vickers hardness (HV) is 110 or higher, and
f7 = $(I-1)^{1/2} \times$ (HV) representing the balance between the impact test value at normal temperature and the Vickers hardness HV is 550 or higher.

6. The free-cutting copper alloy according to any one of claims 1 to 5, which is used for an automobile component, an electrical or electronic apparatus component, a mechanical component, a stationery, a toy, a sliding component, a measuring instrument component, a precision mechanical component, a medical component, a drink-related device or component, a device or component for water drainage, or an industrial plumbing component.

7. A method for producing the free-cutting copper alloy according to any one of claims 1 to 6, the method comprising:

one or more hot working steps,
wherein in the final hot working step among the hot working steps, hot working temperature is higher than 530°C and lower than 650°C, the average cooling rate in the temperature range from 530°C to 440°C after hot working is 0.1 °C/min or higher and 70 °C/min or lower, and the average cooling rate in the temperature range from 400°C to 200°C is 5 °C/min or higher.

## FIG. 1

## FIG. 2

FIG. 3

α PHASE

β PHASE

P COMPOUND

Pb PARTICLE

50μm

## INTERNATIONAL SEARCH REPORT

| International application No. |
|---|
| PCT/JP2020/044418 |

**A. CLASSIFICATION OF SUBJECT MATTER**
C22C 9/04(2006.01)i; C22F 1/00(2006.01)n; C22F 1/08(2006.01)i
FI:     C22C9/04; C22F1/08 K; C22F1/00 623; C22F1/00 624; C22F1/00 625; C22F1/00 626; C22F1/00 630A; C22F1/00 630B; C22F1/00 630C; C22F1/00 630J; C22F1/00 630K; C22F1/00 631A; C22F1/00 631Z; C22F1/00 650F; C22F1/00 661A; C22F1/00 673; C22F1/00 674; C22F1/00 675; C22F1/00 683; C22F1/00 684A; C22F1/00 691B; C22F1/00 691C; C22F1/00 692A; C22F1/00 692B; C22F1/00 694A; C22F1/00 694B

According to International Patent Classification (IPC) or to both national classification and IPC

**B. FIELDS SEARCHED**

Minimum documentation searched (classification system followed by classification symbols)
C22C9/04; C22F1/00; C22F1/08

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-194123 A (DOWA METALTECH CO., LTD.) 17 November 2016 (2016-11-17) | 1-7 |
| A | WO 2013/065830 A1 (MITSUBISHI SHINDOH CO., LTD.) 10 May 2013 (2013-05-10) | 1-7 |
| A | JP 2000-355746 A (TOTO KIKI KABUSHIKI KAISHA) 26 December 2000 (2000-12-26) | 1-7 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January 2021 (21.01.2021) | 09 February 2021 (09.02.2021) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2020/044418

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/016630 A1 (SANBO SHINDO KOGYO KABUSHIKI KAISHA) 16 February 2006 (2006-02-16) | 1-7 |
| A | WO 2009/048008 A1 (TOTO LTD.) 16 April 2009 (2009-04-16) | 1-7 |

Form PCT/ISA/210 (continuation of second sheet) (January 2015)

INTERNATIONAL SEARCH REPORT
Information on patent family members

International application No.

PCT/JP2020/044418

| Patent Documents referred in the Report | Publication Date | Patent Family | Publication Date |
|---|---|---|---|
| JP 2016-194123 A | 17 Nov. 2016 | (Family: none) | |
| WO 2013/065830 A1 | 10 May 2013 | US 2014/0251488 A1 | |
| | | EP 2775005 A1 | |
| | | CN 103917674 A | |
| | | KR 10-2014-0070642 A | |
| | | MX 2014005234 A | |
| | | IN 785MUN2014 A | |
| | | TW 201331392 A | |
| JP 2000-355746 A | 26 Dec. 2000 | WO 1998/010106 A1 | |
| | | EP 947592 A1 | |
| | | EP 1270758 A2 | |
| | | DE 69720261 T2 | |
| | | AU 4136097 A | |
| | | AT 235573 T | |
| | | TW 505705 B | |
| | | CA 2265812 A1 | |
| | | ID 19391 A | |
| | | ID 21785 A | |
| | | CN 1230230 A | |
| | | KR 10-2000-0068520 A | |
| WO 2006/016630 A1 | 16 Feb. 2006 | US 2007/0158002 A1 | |
| | | EP 1777306 A1 | |
| | | CA 2561295 A1 | |
| | | NO 344238 B1 | |
| | | KR 10-2007-0040749 A | |
| | | CN 1969050 A | |
| | | BR PI0509025 A | |
| | | KR 10-2007-0058436 A | |
| | | RU 2006136408 A | |
| | | AU 2005256111 A1 | |
| | | MX PA06010613 A | |
| | | AT 482294 T | |
| | | DK 1777305 T3 | |
| | | NZ 552015 A | |
| | | AT 498698 T | |
| | | PT 1777308 E | |
| | | ES 2378874 T3 | |
| | | CL 2012003194 A1 | |
| WO 2009/048008 A1 | 16 Apr. 2009 | US 2009/0263272 A1 | |
| | | EP 2196549 A1 | |
| | | CN 101407872 A | |
| | | TW 200930822 A | |

Form PCT/ISA/210 (patent family annex) (January 2015)

53

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019048438 W
- JP 2019048455 W
- JP 2019050255 W
- JP 2020006037 W
- WO 2008081947 A
- JP 2000119775 A
- JP 2000119774 A
- WO 2007034571 A
- JP 2016511792 W

- JP 2004263301 A
- WO 2012057055 A
- JP 2013104071 A
- WO 2019035225 A
- JP 2018048397 A
- JP 2019508584 W
- WO 2005093108 A
- US 4055445 A
- JP 2016194123 A

**Non-patent literature cited in the description**

- **GENJIRO MIMA ; MASAHARU HASEGAWA.** *Journal of the Japan Copper and Brass Research Association,* 1963, vol. 2, 62-77